# EUROPEAN PATENT APPLICATION

(11) **EP 4 672 457 A1**
(43) Date of publication of application: **31.12.2025**
(21) Application number: 24890002.9
(22) Date of filing: 10.05.2024
(51) Int. Cl.: H01M 50/213

(54) **BATTERY CELL, MANUFACTURING METHOD THEREFOR, BATTERY, AND ELECTRICAL APPARATUS**

(30) Priority: 13.11.2023 CN 202311507449
(71) Applicant: Contemporary Amperex Technology Co., Limited, Ningde, Fujian 352100 (CN)
(72) Inventor: WU, Kai, Ningde, Fujian 352100 (CN); YANG, Zhenfei, Ningde, Fujian 352100 (CN); WEN, Yuqian, Ningde, Fujian 352100 (CN); WANG, Zejiang, Ningde, Fujian 352100 (CN); NIU, Pengli, Ningde, Fujian 352100 (CN)
(74) Representative: Lorenz Seidler Gossel Part. mbB
(86) International application number: PCT/CN2024/092292
(87) International publication number: WO 2025/102631

(57) **Abstract**

Embodiments of the present application provide a battery cell and a manufacture method for the same, a battery, and an electrical apparatus. The battery cell includes: a shell (1) having a first opening (12); a first end cover (2) closing the first opening (12) and being insulated from the shell (1); and an electrode assembly (3) arranged in the shell (1) and including an electrode body (31), a first tab (32) and a second tab (33), the first tab (32) and the second tab (33) being led out of the electrode body (31) and having opposite polarities, the first tab (32) being electrically connected to the first end cover (2), and the second tab (33) being electrically connected to the shell (1); where the first end cover (2) serves as a first output pole, and the shell (1) serves as a second output pole.

## Description

### CROSS-REFERENCE TO RELATED APPLICATION

The present application is based on and claims priority to Chinese Application No. 202311507449.2 filed on November 13, 2023, and the disclosure of the Chinese Application is incorporated in the present disclosure in its entirety.

### TECHNICAL FIELD

The present application relates to the technical field of batteries, and more particularly to a battery cell and a manufacturing method for the same, a battery and an electrical apparatus.

### BACKGROUND

In recent years, new energy vehicles have made a leap forward in development. In the field of electric vehicles, power batteries, as power sources of electric vehicles, play an irreplaceable role. With the vigorous promotion of new energy vehicles, the demand for power battery products is also growing. Batteries, as core components of new energy vehicles, have relatively high requirements in terms of use reliability.

However, it has always been a difficult issue in the industry as to how to improve the energy density of batteries.

### SUMMARY

The present application aims to improve the energy density of batteries.

According to a first aspect of the present application, there is provided a battery cell, including:
a shell having a first opening;
a first end cover for closing the first opening and being insulated from the shell; and
an electrode assembly arranged in the shell and including an electrode body, a first tab and a second tab, the first tab and the second tab being led out of the electrode body and having opposite polarities, the first tab being electrically connected to the first end cover, and the second tab being electrically connected to the shell;
where the first end cover serves as a first output pole, and the shell serves as a second output pole.

The battery cell of this embodiment uses the first end cover as the first output pole and the shell as the second output pole, and omits electrode terminals, which can reduce the height of the battery cell, improve the energy density of the battery cell, reduce the number of parts, and reduce the process difficulty and production cost. Moreover, the end face and side face of the shell can both be used as the location for connecting the busbar, which can improve the flexibility in electrically connecting multiple battery cells.

In some embodiments, the first tab and the second tab are respectively led out from two ends of the electrode body, the shell includes a side wall and a first end wall, the first end wall is connected to an end of the side wall opposite to the first opening, and the second tab is electrically connected to the first end wall.

In this embodiment, the first tab and the second tab are respectively led out from the two ends of the electrode body, which can ensure the reliability of insulation between the positive tab and the negative tab. When the end face of the electrode body is of a small size, providing a separate tab at each end can improve the current carrying capacity of the tab. Moreover, the first tab and the second tab are electrically connected to the first end cover and the first end wall respectively, which can reduce the process difficulty of electrical connection, improve the reliability of electrical connection, and can also omit busbar, reduce the number of parts, and further improve the conductivity reliability.

In some embodiments, the first tab is directly connected to the first end cover; and/or the second tab is directly connected to the first end wall.

This embodiment can omit the busbar in the battery cell to further reduce the height of the battery cell, thereby improving the energy density. It can also reduce the number of parts, reduce the complexity of the electrical connection structure, improve the reliability of the electrical connection, and simplify the assembly process.

In some embodiments, the shell is provided with a flange at the first opening, and the flange is used to limit the movement of the first end cover in a direction away from the electrode assembly.

In this embodiment, the first end cover and the shell serve as the first output pole and the second output pole respectively. The first end cover and the shell need to be insulated from each other, and therefore cannot be fixedly connected by welding. The method of limiting by the flange can achieve the limiting of the first end cover through a simple structure, thereby preventing the electrode assembly from moving in the shell, and also facilitating the insulation between the shell and the first end cover.

In some embodiments, the flange serves as a second output pole.

In this embodiment, the first end cover serves as the first output pole and the flange serves as the second output pole. Both the first output pole and the second output pole can be connected to the busbar. The two output poles are located at the same end of the battery cell. When multiple battery cells are electrically connected and assembled into a battery, the positive and negative busbars can be welded simply by setting different welding parameters and welding in sequence without flipping the battery cells, which can facilitate the installation and connection of the busbar and improve assembly efficiency.

In some embodiments, the shell includes a side wall and a first end wall, the first end wall is connected to an end of the side wall away from the first opening, and a pressure relief component is provided on the first end wall, and the pressure relief component is used to relieve pressure when the pressure in the battery cell exceeds a preset threshold.

In this embodiment, the pressure relief component is arranged at the other end of the battery cell, which can reduce the impact of high-temperature exhaust on the side where the busbar is located during thermal runaway pressure relief, prevent large-area short circuits or high-voltage ignition in the battery, and avoid causing thermal runaway of the entire power battery system or even fire and explosion, thereby improving the safety in operation of the power battery system. Secondly, the pressure relief component and the output pole are arranged at the two ends of the shell, and there is a larger space for arranging the pressure relief component, which can improve the current carrying capacity of the output pole, and can also conveniently manufacture the pressure relief component and more accurately control its opening pressure, and prevent the welding stress from affecting the opening pressure of the pressure relief component when welding the busbar.

In some embodiments, the battery cell further includes an insulating component arranged between the first end cover and the shell to achieve insulation between the first end cover and the shell.

In this embodiment, an insulating component is arranged between the first end cover and the shell, which can achieve insulation between the first end cover and the shell, so that the first end cover and the shell serve respectively as two output poles, and the reliability of insulation between the two output poles is guaranteed. Moreover, the insulating component can also provide sealing to prevent external impurities and water vapor from entering the interior of the shell, thereby improving the reliability of operation of the battery cell.

In some embodiments, the insulating component is arranged at least partially between the flange and the first end cover and extends beyond an inner edge of the flange.

This embodiment can increase the creepage distance between the flange and the first end cover, which is the shortest distance between the flange and the first end cover along the surface of the insulating material (i.e., the insulating component). When an abnormal situation takes place in the electrode assembly and causes high-voltage discharge occurs, this is equivalent to increasing the safety distance inside the battery cell, which can reduce the possibility of risks such as fire and explosion in the electrode assembly and improve the safety in operation of the battery cell.

In some embodiments, the shell includes a side wall, the insulating component includes a first insulating member, the first insulating member includes a first section and a second section, the first section is located between the flange and the first end cover, the second section is connected to the first section, and the second section is located between an outer edge of the first end cover and the side wall.

The insulating component of this embodiment includes at least an L-shaped structure which can surround the side wall of the first end cover and the area on the outer surface fitted against the flange at the same time, which can further improve the reliability of insulation between the first end cover and the shell.

In some embodiments, the first insulating member includes a third section, the third section is connected to an end of the second section away from the first section, and the third section is fitted against a surface of the first end cover close to the first tab.

The insulating component of this embodiment forms a C-shaped structure, which can surround the side wall of the first end cover, the area on the outer surface fitted against the flange, and the area on an inner surface of the first end cover close to the shell at the same time, thereby maximizing the reliability of insulation between the first end cover and the shell.

In some embodiments, the shell includes a side wall, the flange includes a first portion and a second portion, the first portion is connected to the side wall, the second portion is connected to the first portion and located radially inward of the first portion, and the second portion serves as a second output pole.

This embodiment can improve the limiting effect for the first end cover by arranging the second portion radially inward of the first portion, preventing the first end cover from being displaced, and provide a specific position for connecting the busbar, facilitating positioning of the busbar. With this structure, the first output pole and the second output pole are located at the same end of the battery cell, facilitating arrangement of the pressure relief component at the other end of the battery cell, which can reduce the impact of high-temperature exhaust on the side where the busbar is located during thermal runaway pressure relief, prevent large-area short circuits or high-voltage ignition in the battery, and avoid causing thermal runaway of the entire power battery system or even fire and explosion, thereby improving the safety in operation of the power battery system.

In some embodiments, the second portion includes multiple protrusions arranged at intervals along the circumference of the shell.

In this embodiment, by arranging the protrusions, the welding contact area between the busbar and the flange can be increased, the welding reliability can be improved, the difficulty of positioning during welding can be reduced, the current carrying capacity between the flange and the busbar can be improved, and the conductivity can be enhanced. Furthermore, by providing multiple protrusions, the busbar can be selectively connected to the outer surface of any protrusion to improve the flexibility of the location of the busbar.

In some embodiments, the second portion includes one protrusion that continuously extends over a part of the circumference of the shell.

In this embodiment, by arranging the protrusions, the welding contact area between the busbar and the flange can be increased, the welding reliability can be improved, the difficulty of positioning during welding can be reduced, the current carrying capacity between the flange and the busbar can be improved, and the conductivity can be enhanced. Furthermore, by providing a single continuously extending protrusion, manufacturing is facilitated and the connection area of the busbar on the flange can be defined.

In some embodiments, the first end cover is welded to the first tab, and the welding tracks are distributed in an area surrounded by an inner edge of the second portion, a side edge of the second portion, and an inner edge of the first portion.

In this embodiment, when welding the first end cover to the first tab, the radial welding size range can be increased to increase the distribution range of the first tab that allows current to pass directly. During charging and discharging, lithium ions can be more smoothly deintercalated and intercalated, the risk of lithium plating is reduced, and the conductivity between the first end cover and the first tab is improved.

In some embodiments, the battery cell further includes an insulating component arranged between the first end cover and the shell to achieve insulation between the first end cover and the shell. The insulating component includes:
a first insulating member; and
a second insulating member arranged radially inward of the first insulating member, the heat-resistant temperature of the second insulating member being higher than the heat-resistant temperature of the first insulating member.

In this embodiment, the busbar is welded to the second portion, which can prevent insulation failure caused by heat generated by high temperature during welding, thereby improving the reliability of the battery cell.

In some embodiments, the second insulating member and the first insulating member are mated using a concave-convex structure at the abutting position.

In this embodiment, the second insulating member and the first insulating member are mated using a concave-convex structure at the abutting position, which enables the second insulating member and the first insulating member to be fitted tightly together, prevents a gap between the two from causing a short circuit between the flange and the first end cover, and also improves the sealing effect.

In some embodiments, the Vickers hardness of the first insulating member is lower than the Vickers hardness of the second insulating member, and the thickness of the part of the first insulating member between the first portion and the first end cover is greater than the maximum thickness of the second insulating member.

This embodiment takes into account the fact that current insulating materials can barely achieve sealing and high-temperature insulation at the same time, and sets the first insulating member to have a lower Vickers hardness and a larger thickness, so that when the first insulating member and the second insulating member are squeezed between the flange and the first end cover at the same time, the first insulating member undergoes greater deformation in order to allow the surfaces of the first insulating member and the second insulating member to be flush, thereby achieving a better sealing effect. Moreover, the second insulating member can achieve high-temperature insulation, so that when the busbar is welded at the location of the second portion, insulation failure caused by the heat generated by the high temperature during the welding can be prevented, thereby improving the reliability of the battery cell.

In some embodiments, the flange is configured to be formed by removing material at the first opening.

This embodiment facilitates the formation of a flange of any shape and formation of a wider flange, which can increase the welding contact area between the busbar and the flange, improve the welding reliability, reduce the difficulty of positioning during welding, and improve the current carrying capacity between the flange and the busbar. Moreover, the first opening can be flexibly punched into a required shape to further meet the layout requirements of the welding track between the first end cover and the first tab. In addition, compared with the rolling method, forming the flange by removing material can ensure that the flange is flat, without being affected by the shape of the battery cell and the width of the flange, and no wrinkles will be produced on the flange, thereby eliminating the need for flattening treatment, and the flange is also enabled to be in reliable contact with the insulating component, thereby improving the sealing effect.

In some embodiments, the shell includes a side wall and a first end wall, the first end wall is connected to an end of the side wall opposite to the first opening, the side wall has a second opening; the first end wall is formed by a second end cover, and the second end cover is used to close the second opening.

This embodiment is based on a structure in which a flange is formed by removing material. As shown in the figures, the closed end of the container needs to be punched to form a first opening. The container includes a side wall and a second end wall. The second end wall is connected to one end of the side wall. The second end wall can completely close the opening of the side wall, or partially close the opening of the side wall. However, it is necessary to ensure that the second end wall completely covers the flange and the covering area is larger than the area of the flange. Since a second end wall is provided at one end of the side wall, a second opening needs to be provided at the other end, and the second opening is closed by a separate second end cover. This structure provides conditions for forming a flange by removing material.

In some embodiments, the second end cover is connected to the side wall by a first weld, and the first weld is formed between an outer edge of the second end cover and an inner surface of the side wall.

This embodiment can simplify the structure of the second end cover, and the second end cover may not protrude from the end portion of the side wall, which can further reduce the height of the battery cell, thereby improving the energy density of the battery cell.

In some embodiments, the second end cover is connected to the side wall by a first weld, and the second end cover includes a first body portion and a bent portion, a first end of the bent portion is connected to an outer edge of the first body portion, a second end of the bent portion covers the end portion of the side wall, and the first weld is formed between the second end of the bent portion and the end portion of the side wall.

The second end cover in this embodiment is provided with a bent portion, and the second end of the bent portion covers the end portion of the side wall, so that the second end cover can be positioned along the height direction of the battery cell and prevented from moving during welding without the need for additional tooling. Furthermore, if the pressure relief component is arranged on the second end cover, the risk of the pressure relief component being damaged by external collision is reduced by making the central area of the second end cover concave inward.

In some embodiments, the shell includes a side wall and a first end wall, the first end wall is connected to an end of the side wall opposite to the first opening, the flange only includes a first portion, the first portion is connected to the side wall, and the first end wall serves as a second output pole.

In this embodiment, when the flange has a narrow radial width, it can be used only to limit the electrode assembly, and the first end wall serves as the second output pole, which provides a larger area for the second output pole to be connected with the busbar, which is also beneficial for positioning during the welding and can improve the reliability of the electrical connection.

In some embodiments, the flange is configured to be formed by bending the end portion of the side wall.

This embodiment forms the flange by bending, and may adopt a shell in which the side wall and the first end wall are integrally formed. After the electrode assembly is mounted in the shell, a flange shape is formed directly through bending without the necessity to form an opening through an additional process, which can simplify the process flow and improve assembly efficiency.

In some embodiments, the side wall and the first end wall are integrally formed.

In this embodiment, the side wall and the first end wall are integrally formed, which can omit the additional process of connecting the first end wall with the side wall, thereby further simplifying the process flow, and improving assembly efficiency.

In some embodiments, the shell includes a side wall, the side wall includes a second body portion and a protruding portion, the protruding portion protrudes toward the inside of the shell relative to the second body portion, and the protruding portion is located between the first end cover and the electrode body in the height direction of the battery cell.

This embodiment can provide support for the edge position of the first end cover by arranging a protruding portion on the side wall, so that the protruding portion can support the first end cover together with the first tab. When the first end cover is subjected to external compression or the battery cell is subjected to vibration force, the force on the first tab can be reduced, the first tab can be prevented from being deformed, and the reliability of the electrical connection between the first end cover and the first tab can be improved.

In some embodiments, the protruding portion extends to a position radially inward of the outer side wall of the electrode body.

This embodiment allows the protruding portion to extend to a position radially inward of the outer side wall of the electrode body, so that the protruding portion can be supported between the electrode body and the first end cover to provide more stable support for the first end cover, and the height of the first tab can be maintained, thereby improving the reliability of the electrical connection between the first tab and the first end cover.

In some embodiments, the outer edge of the first tab is retracted inwardly by a preset distance from the outer side wall of the electrode body.

In this embodiment, the outer edge of the first tab is retracted inwardly by a preset distance, which can allow the protruding portion to be designed with a larger extension length in the radial direction, so as to provide more stable support for the first end cover and maintain the height of the first tab; it can also avoid excessive squeezing of the insulating material on the side wall of the first tab when the protruding portion is formed during the assembly process, causing insulation failure; in addition, in the case where the insulating component wraps the edge area of the inner surface of the first end cover, the first tab is also enabled to avoid the insulating component.

In some embodiments, the battery cell further includes a third insulating member, the third insulating member includes a fourth section and a fifth section, the fourth section is fitted against the outer side wall of the first tab, a first end of the fifth section is connected to an end of the fourth section close to a root of the first tab, and the fifth section is fitted against the area of the end face of the electrode body where the first tab is not arranged.

In this embodiment, the outer side wall of the first tab and the area of the end face of the electrode body where the first tab is not arranged can be wrapped by the third insulating member to prevent short circuit caused by contact with the protruding portion and improve the reliability of insulation between the electrode assembly and the shell.

In some embodiments, the third insulating member further includes a sixth section, the sixth section covers an end portion area of the outer side wall of the electrode body, and a first end of the sixth section is connected to a second end of the fifth section.

In this embodiment, the sixth section is provided to cover the end portion area of the outer side wall of the electrode body, thereby improving the reliability of insulation between the electrode body and the side wall and preventing short circuit.

In some embodiments, the third insulating member further includes a seventh section, the seventh section is fitted against the area of the end face of the first tab close to the outer edge, and the first end of the seventh section is connected to an end of the fourth section away from the root of the first tab.

In this embodiment, the seventh section is provided to wrap the outer edge area of the first tab, and fully wrap the first tab together with the fourth section, so as to improve the insulation performance, and also smooth and fit the outer edge area of the first tab, so that the first end cover and the end face of the first tab can be fitted better.

In some embodiments, the material of the shell includes steel, the material of the first end cover includes aluminum, the first end cover serves as the positive output pole, and the shell serves as the negative output pole; or the material of the shell includes aluminum, the material of the first end cover includes copper or steel, the first end cover serves as the negative output pole, and the shell serves as the positive output pole.

In this embodiment, the polarities of the first output pole and the second output pole can be selected according to the material of the first end cover, so as to achieve welding of matching materials as much as possible and reduce the risk of leakage after welding.

In some embodiments, the battery cell presents a cylinder shape.

For a cylindrical battery cell, the first opening can be conveniently formed by removing material, and if the end portion of the side wall is bent to form a flange, wrinkles are not likely to be produced when rolling the flange.

According to a second aspect of the present application, there is provided a battery including the battery cell of the above embodiment.

According to a third aspect of the present application, there is provided an electrical apparatus including the battery cell or battery of the above embodiment.

According to a fourth aspect of the present application, there is provided a manufacturing method for a battery cell, including:
an assembly providing step: providing a shell, a first end cover and an electrode assembly, the shell having a first opening, the electrode assembly including an electrode body, a first tab and a second tab, the first tab and the second tab being led out of the electrode body and having opposite polarities;
an electrode placement step: placing the electrode assembly into the shell;
a first opening closure step: closing the first opening by the first end cover, and insulating the first end cover from the shell; and
an electrical connection step: electrically connecting the first tab to the first end cover, and electrically connecting the second tab to the shell, the first end cover serving as the first output pole, and the shell serving as the second output pole.

The battery cell of this embodiment uses the first end cover as the first output pole and the shell as the second output pole, and omits electrode terminals, which can reduce the height of the battery cell, improve the energy density of the battery cell, reduce the number of parts, and reduce the process difficulty and production cost. Moreover, the end face and side face of the shell can both be used as the location for connecting the busbar, which can improve the flexibility in electrically connecting multiple battery cells.

In some embodiments, the manufacturing method further includes:
providing a container having a side wall and a second end wall, the second end wall being connected to an end portion of the side wall; and
removing material from the second end wall to form the first opening, a flange being formed outside the first opening, the flange being used to limit the movement of the first end cover in a direction away from the electrode assembly.

This embodiment facilitates the formation of a flange of any shape and formation of a wider flange, which can increase the welding contact area between the busbar and the flange, improve the welding reliability, reduce the difficulty of positioning during welding, and improve the current carrying capacity between the flange and the busbar. Moreover, the first opening can be flexibly punched into a required shape to further meet the layout requirements of the welding track between the first end cover and the first tab. In addition, compared with the rolling method, forming the flange by removing material can ensure that the flange is flat, without being affected by the shape of the battery cell and the width of the flange, and no wrinkles will be produced on the flange, thereby eliminating the need for flattening treatment, and the flange is also enabled to be in reliable contact with the insulating component, thereby improving the sealing effect.

In some embodiments, the container has a second opening, the second opening is opposite to the second end wall, and the first opening closure step includes:
before the electrode placement step, placing the first end cover into the container through the second opening so that the first end cover closes the first opening.

In this embodiment, for the structure in which the flange is formed by removing material, the first end cover can be placed through the second opening at the other end of the container to close the first opening, and then the electrode assembly can be placed, so that the first end cover can be smoothly installed.

In some embodiments, the battery cell further includes an insulating component arranged between the first end cover and the shell to achieve insulation between the first end cover and the shell, and the first opening closure step further includes:
placing the insulating component in the container having the first opening.

In this embodiment, for the structure in which the flange is formed by removing material, the insulating component can be placed through the second opening at the other end of the container, so that the first end cover is insulated from the shell after being placed.

In some embodiments, after the insulating component and the first end cover are placed, the side wall of the container is rolled to form a protruding portion, and the protruding portion protrudes toward the inside of the shell to limit the first end cover.

After the protruding portion is formed by rolling in this embodiment, the first end cover and the insulating component can be limited to prevent the first end cover from being displaced, and good positioning can be achieved after the electrode assembly is mounted. If the extension length of the insulating component on the side face exceeds the inner surface of the first end cover, the exceeding portion of the insulating component can be bent to be fitted against the inner surface of the first end cover during rolling to achieve insulation between the protruding portion and the first end cover.

In some embodiments, the manufacturing method further includes a second opening closure step, which includes:
after the first opening closure step and the electrode placement step, closing the second opening by a second end cover.

After the electrode assembly is placed in this embodiment, the second opening is closed by the second end cover, so that the installation of all components can be accomplished. The second end cover can be connected to the side wall by welding. The second opening is closed by a separate second end cover, and this structure provides conditions for forming a flange by removing material.

In some embodiments, the shell includes a side wall and a first end wall, the first end wall is connected to an end of the side wall opposite to the first opening, and the first opening closure step includes:
after the electrode placement step, covering the first end cover on the first tab, and bending the end portion of the side wall to form a flange, the flange being used to limit the movement of the first end cover in a direction away from the electrode assembly so that the first end cover closes the first opening.

This embodiment forms the flange by bending, and may adopt a shell in which the side wall and the first end wall are integrally formed. After the electrode assembly is mounted in the shell, a flange shape is formed directly through bending without the necessity to form an opening through an additional process, which can simplify the process flow and improve assembly efficiency.

In some embodiments, the step of bending the end portion of the side wall to form a flange includes:
bending the end portion of the side wall to form a flange by upset sealing.

This embodiment forms the flange by upset sealing, which involves a simple process, and suitable insulating components can be selected according to the shape of the flange to achieve comprehensive improvement in terms of improving insulation performance, improving sealing performance, and increasing creepage distance.

In some embodiments, the step of bending the end portion of the side wall to form a flange includes:
providing insulating glue on the inner surface of the side wall at the first opening; and
hot pressing the end portion of the side wall to form the flange, the flange and the first end cover being bonded by the insulating glue, the insulating glue being solidified to form an insulating component, which is used to achieve insulation between the first end cover and the shell.

This embodiment can achieve greater connection strength by adopting thermal composite sealing, and can omit the formation of the protruding portion by roller grooving. Not providing the protruding portion is beneficial to reducing the height of the first tab, thereby reducing the overall height of the battery cell, and consequently improving the energy density of the battery cell.

### BRIEF DESCRIPTION OF DRAWINGS

In order to illustrate the technical solutions of the embodiments of the present application more clearly, the following briefly introduces the accompanying drawings required in the embodiments of the present application. Obviously, the accompanying drawings described below are only some embodiments of the present application. Those of ordinary skill in the art can also obtain other drawings according to the drawings without any creative work.
FIG. 1 is a schematic structural view of a battery installed to a vehicle according to some embodiments of the present application;
FIG. 2 is an exploded view of a battery according to a first embodiment of the present application;
FIG. 3 is an outline view of a battery cell according to the first embodiment of the present application;
FIG. 4 is a cross-sectional view of a battery cell according to the first embodiment of the present application;
FIG. 5A is a schematic structural view of a flange in FIG. 4 according to some embodiments;
FIG. 5B is a schematic view of a variation embodiment of FIG. 5A;
FIG. 6 is an enlarged view at A in FIG. 4;
FIG. 7A is an enlarged view at B in FIG. 4;
FIG. 7B is a schematic view of a variation embodiment of FIG. 7A;
FIG. 8 is a schematic structural view of a container provided in the assembly process of the battery cell according to the first embodiment of the present application;
FIG. 9 is a schematic structural view of removing material from a second end wall of the container to form a first opening;
FIG. 10 is a schematic view of placing an insulating component and a first end cover in the container formed with the first opening;
FIG. 11 is a bottom view of FIG. 10;
FIG. 12 is a schematic structural view of a protruding portion formed on a side wall of the container;
FIG. 13 is a cross-sectional view of a battery cell according to a second embodiment of the present application; and
FIG. 14 is a cross-sectional view of a battery cell according to a third embodiment of the present application.

The accompanying drawings are not drawn to actual scale.

Description of reference numerals:
100. battery cell;
1. shell; 1'. container; 11. flange; 111. first portion; 112. second portion; 112'. protrusion; 12. first opening; 13. side wall; 131. second body portion; 132. protruding portion; 14. first end wall; 15. second opening; 16. second end wall;
2. first end cover; 21. injection hole; 22. second weld; 23. fourth weld;
3. electrode assembly; 31. electrode body; 311. through hole; 32. first tab; 33. second tab;
4. second end cover; 41. first weld; 42. third weld; 43. first body portion; 44. bent portion;
5'. insulating component; 5. first insulating member; 50. concave-convex structure; 51. first section; 52. second section; 53. third section; 5A. first protrusion; 6. second insulating member; 6A. second protrusion; 7. sealing member; 8. pressure relief component; 81. score; 9. third insulating member; 91. fourth section; 92. fifth section; 93. sixth section; 94. seventh section;
200. battery; 201. box body assembly; 201A. box body; 201B. first cover body; 201C. second cover body;
300. vehicle; 301. axle; 302. wheel; 303. motor; 304. controller.

### DETAILED DESCRIPTION

Embodiments of the present application are described in further detail below in conjunction with the drawings and embodiments. The following detailed description of the embodiments and the accompanying drawings are used to exemplarily explain the principles of the present application, but should not be configured to limit the scope of the present application, that is, the present application is not limited to the described embodiments.

In the descriptions of the embodiments of the present application, the term "multiple" refers to more than two (including two), and similarly, "multiple groups" refers to more than two groups (including two groups); and "multiple pieces" refers to more than two pieces (including two pieces).

The orientations or positional relationships indicated by the terms "upper", "lower", "top", "bottom", "front", "rear", "inner", "outer" and the like are used in the present application only for facilitating the description of the present application, rather than indicating or implying that the apparatus referred to needs to have a particular orientation or be constructed and operated in a particular orientation, and therefore they shall not be interpreted as limiting the protection scope of the present application.

In addition, the terms "first", "second", "third", and the like are only for the purpose of description, and may not be understood as indicating or implying the relative importance. "Perpendicular" is not strictly perpendicular, but within the allowable range of errors. "Parallel" is not strictly parallel, but within the allowable range of errors. Orientation words appearing in the following description are all directions shown in the drawings, and do not limit the specific structure of the present application.

In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

Reference herein to "an embodiment" means that a particular feature, structure, or characteristic described in conjunction with the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

An existing battery cell generally includes a case and an electrode assembly accommodated in the case, and the case is filled with electrolyte. The electrode assembly is mainly formed by stacking or winding a first electrode plate and a second electrode plate having opposite polarities, and an insulating member such as a membrane is typically arranged between the first electrode plate and the second electrode plate. Portions of both the first electrode plate and the second electrode plate that are coated with active materials constitute a main body part of the electrode assembly, and portions of both the first electrode plate and the second electrode plate that are not coated with active materials respectively constitute a first tab and a second tab. In a battery cell, the first electrode plate may be a positive electrode plate, including a positive electrode current collection member and positive electrode active material layers arranged on two sides of the positive electrode current collection member. The positive electrode current collector may use a metal foil or a composite current collector. For example, as the metal foil, silver surface-treated aluminum or stainless steel, stainless steel, copper, aluminum, nickel, baked carbon, carbon, nickel, titanium, or the like may be used. The composite current collector may include a high molecular material substrate layer and a metal layer. The composite current collector may be formed by forming a metal material (such as aluminum, aluminum alloy, nickel, nickel alloy, titanium, titanium alloy, silver, and silver alloy) on a polymer material substrate (such as a substrate of polypropylene, polyethylene terephthalate, polybutylene terephthalate, polystyrene, or polyethylene). Each positive electrode active material layer may include at least one of the following materials: a lithium-containing phosphate, a lithium transition metal oxide, and their respective modified compounds. However, the present application is not limited to these materials, or other conventional materials that can be used as positive electrode active materials of batteries may be used. These positive electrode active materials may be used alone or two or more of these positive electrode active materials may be combined for use. Each second electrode plate may be a negative electrode plate, including a negative current collection member and negative active material layers arranged on two sides of the negative current collection member. The negative current collector may use a metal foil or a composite current collector. For example, as the metal foil, silver surface-treated aluminum or stainless steel, stainless steel, copper, aluminum, nickel, baked carbon, carbon, nickel, titanium, or the like may be used. The composite current collector may include a high molecular material substrate layer and a metal layer. The composite current collector may be formed by forming a metal material (such as copper, copper alloy, nickel, nickel alloy, titanium, titanium alloy, silver, and silver alloy) on a polymer material substrate (such as a substrate of polypropylene, polyethylene terephthalate, polybutylene terephthalate, polystyrene, or polyethylene). The negative active material layers may use a negative active material that are commonly known in this field and are applied to batteries. As an example, the negative active material may include at least one of the following materials: artificial graphite, natural graphite, soft carbon, hard carbon, a silicon-based material, a tin-based material, lithium titanate, and the like. Optionally, the first electrode plate may also be a negative electrode plate, and correspondingly, each second electrode plate may be a positive electrode plate. The first tab and the second tab may be located at one end of the main body part jointly or at two ends of the main body part separately. During charging and discharging of the battery cell, the positive electrode active material and the negative electrode active material react with the electrolyte, and the tabs are connected to electrode terminals to form a current loop.

In the current battery cell structure, the positive output pole is generally led out through an electrode terminal provided on the end cover. The electrode terminal protrudes by a certain height from the outer surface of the end cover, which increases the overall height of the battery cell and thus reduces the energy density of the battery cell. In view of the disadvantages of this structure, the present application intends to reduce the height of the battery cell for the purpose of reducing the space occupied by the electrode terminals.

According to the above solution idea, the present application provides a battery cell, including: a shell having a first opening; a first end cover closing the first opening and insulated from the shell; and an electrode assembly arranged in the shell and including an electrode body, a first tab and a second tab, the first tab and the second tab being led out of the electrode body and having opposite polarities, the first tab being electrically connected to the first end cover, and the second tab being electrically connected to the shell; where the first end cover serves as a first output pole, and the shell serves as a second output pole.

The battery cell of this embodiment uses the first end cover as the first output pole and the shell as the second output pole and omits electrode terminals, which can reduce the height of the battery cell, improve the energy density of the battery cell, reduce the number of parts, and reduce the process difficulty and production cost.

The battery cell according to the embodiment of the present application is applicable to a battery and an electrical apparatus using the battery cell. The battery is also applicable to the electrical apparatus.

The battery according to the embodiments of the present application is also applied to an electrical apparatus. The electrical apparatus may be a storage battery car, an electric vehicle, a ship, a spacecraft, or the like. For example, the spacecraft includes an airplane, a rocket, a space shuttle, a spaceship, and the like.

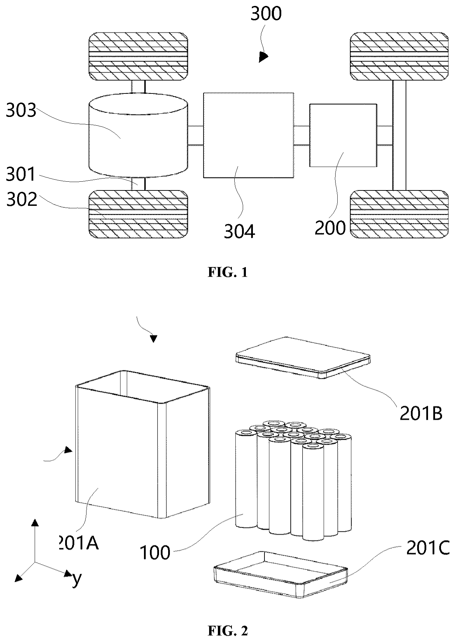

As shown in FIG. 1, the electrical apparatus may be a vehicle 300, which may be, for example, a new-energy vehicle. The new-energy vehicle may be an all-electric vehicle, a hybrid electric vehicle, an extended range electric vehicle, and the like, or the electrical apparatus may be an unmanned aerial vehicle, a ship, or the like. Specifically, the vehicle 300 may include an axle 301, wheels 302 connected to the axle 301, a motor 303, a controller 304, and a battery 200. The motor 303 is configured to drive the axle 301 to rotate, and the controller 304 is configured to control the motor 303 to work. The battery 200 may be arranged at a bottom, head, or tail of the vehicle 300 to provide electrical energy for the operation of the motor 303 and other components in the vehicle.

As shown in FIG. 2, the battery 200 includes a box body assembly 201 and a battery cell 100. The battery 200 may include one or more battery cells 100. If there are multiple battery cells 100, the multiple battery cells 100 may be connected in series or in parallel or may be in parallel-series connection. The parallel-series connection means that the multiple battery cells 100 are connected in series and in parallel. It may be that multiple battery cells 100 are connected in series or in parallel or are in parallel-series connection first to form multiple battery modules, and the multiple battery modules are connected in series or in parallel or are in parallel-series connection to form an entirety which is accommodated in the box body assembly 201. Or, all the battery cells 100 may be directly connected in series or in parallel or may be in parallel-series connection, and then an entirety composed of all the battery cells 100 is accommodated in the box body assembly 201.

The box body assembly 201 may be a portion of a battery pack. The box body assembly 201 may be detachably mounted on the electrical apparatus; or the box body assembly 201 may be a space that is formed by a structural member in the electrical apparatus and is configured to accommodate the battery cells 100. For example, when the battery cells 100 are applied to the vehicle 300, the box body assembly 201 is a space that is formed by a frame and is configured to accommodate the battery cells 100.

The box body assembly 201 is internally hollow, and is used to accommodate one or more battery cells 100. The box body assembly 201 may also have different shapes and sizes according to a shape, number, combination manner and other requirements of the battery cells 100 accommodated. For example, the box body assembly 201 may include: a box body 201A, a first cover body 201B and a second cover body 201C. The box body 201A has an opening at both ends, and the first cover body 201B and the second cover body 201C are used to close the opening at both ends of the box body 201A. In FIG. 2, according to an arrangement manner of the multiple battery cells 100, the box body 201A is of a rectangular tubular structure. In order to facilitate maintenance of the battery 200, the box body assembly 201 is detachably installed on the electrical apparatus.

The battery cell 100 may be a secondary battery. The secondary battery refers to a battery cell 100 that is allowed to be continue to be used by activating an active material by means of charging after the battery cell 100 is discharged.

The battery cell 100 may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in the embodiments of the present application.

For example, the battery cell 100 may be a cylindrical battery cell, a prismatic battery cell, a pouch battery cell, or a battery cell in another shape. The prismatic battery cell includes a square-shell battery cell, a blade-shaped battery cell, and a multi-prism battery. For example, the multi-prism battery may be a hexagonal prism battery. The present application has no special limitation.

The following description is made by taking the cylindrical battery cell 100 as an example, but is also applicable to battery cells of other shapes. The multiple battery cells 100 may be provided in an xoy plane perpendicular to the first direction z, and the multiple battery cells 100 may be arranged in a rectangular array along the second direction x and the third direction y, where the second direction x is perpendicular to the third direction y.

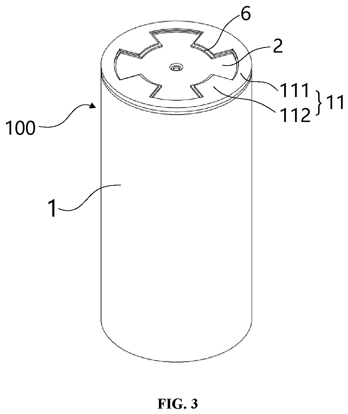

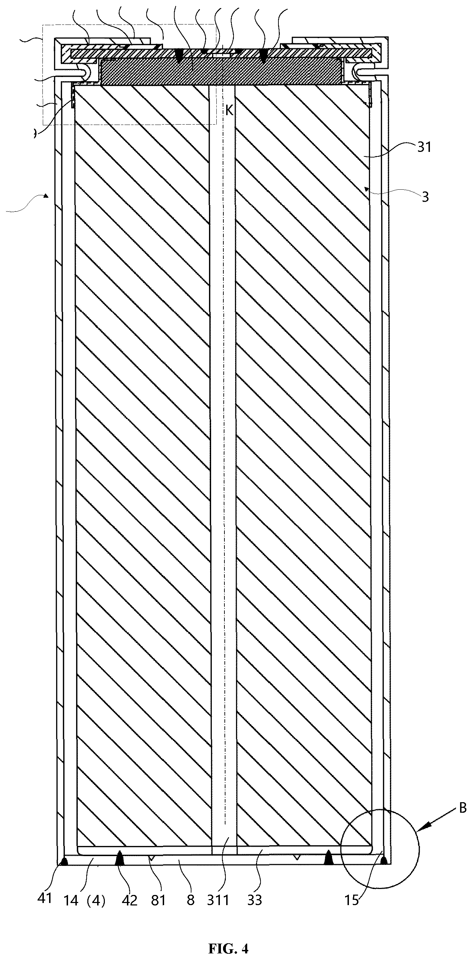

FIG. 3 is an outline view of a battery cell according to some embodiments of the present application, and FIG. 4 is a cross-sectional view of a battery cell according to some embodiments of the present application. The battery cell 100 includes: a shell 1 having a first opening 12; a first end cover 2 closing the first opening 12 and insulated from the shell 1; and an electrode assembly 3 arranged in the shell 1 and including an electrode body 31, a first tab 32 and a second tab 33, the first tab 32 and the second tab 33 being led out of the electrode body 31 and having opposite polarities, the first tab 32 being electrically connected to the first end cover 2, and the second tab 33 being electrically connected to the shell 1; where the first end cover 2 serves as a first output pole, and the shell 1 serves as a second output pole.

The shell 1 has a thin-walled hollow structure for accommodating the electrode assembly 3 and the electrolyte. The shell 1 may be a steel shell, an aluminum shell, a composite metal shell (such as a copper-aluminum composite shell), an aluminum-plastic film, or the like. The shell 1 may be cylindrical, and one axial end of the shell 1 is provided with the first opening 12 and is covered by the first end cover 2, and the other end of the shell 1 is a closed structure, or is also provided with an opening and is closed by an end cover.

The electrode assembly 3 is formed by winding a first electrode plate and a second electrode plate with opposite polarities around a winding axis K, and the winding axis K is consistent with the first direction z. Typically, a separator, such as a membrane, is provided between the first electrode plate and the second electrode plate. For a cylindrical battery cell 100, the wound electrode assembly 3 may be cylindrical. Optionally, the battery cell 100 may also be in the shape of a rectangular parallelepiped, and the wound electrode assembly 3 may be in a flat shape.

The portions of the first electrode plate and the second electrode plate coated with the active material constitute an electrode body 31. A first through hole 311 is provided at the center of the electrode body 31 for containing electrolyte or serving as an exhaust channel for pressure relief. The portions of the first electrode plate and the second electrode plate not coated with the active material respectively constitute the first tab 32 and the second tab 33. One of the first tab 32 and the second tab 33 is a negative tab, and the other is a positive tab. The first tab 32 and the second tab 33 may be led out from the same end of the electrode body 31, or may be led out from two ends of the electrode body 31 respectively.

The first tab 32 is electrically connected to the first end cover 2, and the second tab 33 is electrically connected to the shell 1, and specifically can be electrically connected to the side wall or end wall of the shell 1, for example, by welding or the like. The first end cover 2 serves as a first output pole, and the shell 1 serves as a second output pole. The first output pole and the second output pole have opposite polarities. For example, the first output pole is a positive electrode and the second output pole is a negative electrode, or vice versa, and the first end cover 2 and the shell 1 are insulated from each other.

The battery cell 100 of this embodiment uses the first end cover 2 as the first output pole and the shell 1 as the second output pole, omitting electrode terminals, which can reduce the height of the battery cell 100, improve the energy density of the battery cell 100, reduce the number of parts, and reduce the process difficulty and production cost. Moreover, the end face and side face of the shell 1 can both be used as the location for connecting the busbar, which can improve the flexibility in electrically connecting multiple battery cells 100.

In some embodiments, as shown in FIG. 4, the first tab 32 and the second tab 33 are respectively led out from two ends of the electrode body 31, the shell 1 includes a side wall 13 and a first end wall 14, the first end wall 14 is connected to an end of the side wall 13 opposite to the first opening 12, and the second tab 33 is electrically connected to the first end wall 14.

For a cylindrical battery cell, the side wall 13 may be cylindrical, the first end wall 14 closes an end of the side wall 13 away from the first opening 12, the first tab 32 is electrically connected to the first end cover 2, the second tab 33 is electrically connected to the first end wall 14, and the first end wall 14 and the first end cover 2 are respectively located at the two ends of the side wall 13, and the electrical connection can be achieved, for example, by welding.

Optionally, for a structure in which the first tab 32 and the second tab 33 are respectively led out from two ends of the electrode body 31, the second tab 33 may also be electrically connected to the side wall 13. Optionally, the first tab 32 and the second tab 33 may alternatively be led out from the same end of the electrode body 31.

In this embodiment, the first tab 32 and the second tab 33 are respectively led out from the two ends of the electrode body 31, which can ensure the reliability of insulation between the positive tab and the negative tab. When the end face of the electrode body 31 is of a small size, providing a separate tab at each end can improve the current carrying capacity of the tab. Moreover, the first tab 32 and the second tab 33 are electrically connected to the first end cover 2 and the first end wall 14 respectively, which can reduce the process difficulty of electrical connection, improve the reliability of electrical connection, and can also omit the current collector, reduce the number of parts, and further improve the conductivity reliability.

In some embodiments, the first tab 32 is directly connected to the first end cover 2; and/or the second tab 33 is directly connected to the first end wall 14.

Specifically, the first tab 32 may be treated by a flattening process to form an end face of the first tab 32 into a plane, and the first end cover 2 is welded to the entire flattened end face of the first tab 32. The second tab 33 may be treated by a flattening process to form an end face of the second tab 33 into a plane, and the first end wall 14 is welded to the entire flattened end face of the second tab 33.

Optionally, the first tab 32 is electrically connected to the first end cover 2 via a first current collector, and/or the second tab 33 is electrically connected to the first end wall 14 via a second current collector.

This embodiment can omit the busbar in the battery cell 100 to further reduce the height of the battery cell 100, thereby improving the energy density. It can also reduce the number of parts, reduce the complexity of the electrical connection structure, improve the reliability of the electrical connection, and simplify the assembly process.

In some embodiments, as shown in FIG. 4, the shell 1 is provided with a flange 11 at the first opening 12, and the flange 11 is used to limit the movement of the first end cover 2 in a direction away from the electrode assembly 3.

The flange 11 is arranged at an angle relative to the side wall 13 of the shell 1, for example, forming a right angle. The flange 11 and the side wall 13 may be integrally formed or connected by welding or the like. The flange 11 may extend continuously along the entire circumference of the shell 1 to improve the overall strength of the flange 11 and optimize the limiting effect; or the flange 11 may be arranged at intervals along the entire circumference of the shell 1.

In this embodiment, the first end cover 2 and the shell 1 serve as the first output pole and the second output pole respectively. The first end cover 2 and the shell 1 need to be insulated from each other, and therefore cannot be fixedly connected by welding. The method of limiting by the flange 11 can achieve the limiting of the first end cover 2 through a simple structure, thereby preventing the electrode assembly 3 from moving in the shell 1, and also facilitating the insulation between the shell 1 and the first end cover 2.

In some embodiments, the flange 11 serves as the second output pole.

The flange 11 and the first end cover 2 are insulated from each other. For example, an insulating member, insulating glue, or the like may be provided between the two. When multiple battery cells 100 are electrically connected and assembled into a battery 200, the battery 200 also includes a first busbar and a second busbar. One end of the first busbar is connected to the first end cover 2, and one end of the second busbar is connected to the flange 11. The busbar led out from the first end cover 2 passes through the flange 11. In order to achieve insulation between the first busbar and the flange 11, an insulating layer, such as a fixed insulating pad or an insulating film, may be arranged between the first busbar and the flange 11, or an insulating layer may be coated on the outer surface of the first busbar, or an insulating layer may be coated on the outer surface of the flange 11 in the area where the first busbar passes, etc.

As shown in FIG. 4, if the outer surface of the first end cover 2 is lower than the outer surface of the flange 11, in order to lead out the first busbar, the first busbar can be provided with a bent structure or the exposed area of the first end cover 2 can be locally thickened to adapt to the difference in height between the first end cover 2 and the flange 11. Optionally, if the outer surface of the first end cover 2 is lower than and flush with the outer surface of the flange 11, the first busbar may be designed as a flat plate structure.

Optionally, the second output pole can also be led out from the end face or side wall 13 of the shell 1 opposite to the first opening 12, thereby improving the flexibility in leading out the second output pole, and the first output pole and the second output pole are not limited to being led out only from the two ends of the battery cell 100.

In this embodiment, the first end cover 2 serves as the first output pole and the flange 11 serves as the second output pole. Both the first output pole and the second output pole can be connected to the busbar. The two output poles are located at the same end of the battery cell 100. When multiple battery cells 100 are electrically connected and assembled into a battery 200, the positive and negative busbars can be welded simply by setting different welding parameters and welding in sequence without flipping the battery cells 100, which can facilitate the installation and connection of the busbar and improve assembly efficiency.

In some embodiments, the shell 1 includes a side wall 13 and a first end wall 14, the first end wall 14 is connected to an end of the side wall 13 away from the first opening 12, and a pressure relief component 8 is provided on the first end wall 14, and the pressure relief component 8 is used to relieve pressure when the pressure in the battery cell 100 exceeds a preset threshold.

The pressure relief component 8 may be integrally formed on the first end wall 14, that is, a thickness-reduced portion is provided on the first end wall 14, and the area enclosed by the thickness-reduced portion constitutes the pressure relief component 8. For example, the thickness-reduced portion may be a score 81, which is arranged on the inner wall of the first end wall 14 to prevent rust at the position of the score 81 due to high moisture content outside the battery cell 100; and/or the score 81 is arranged on the outer wall of the first end wall 14, and when the side wall 13 and the first end wall 14 are integrally formed, the score 81 can be conveniently manufactured. After the pressure relief component 8 is opened, the pressure relief component 8 is destroyed at the thinned portion, thereby forming an opening or channel for the internal pressure or temperature to be relieved.

In this embodiment, the pressure relief component 8 is arranged at the other end of the battery cell 100, which can reduce the impact of high-temperature exhaust on the side where the busbar is located during thermal runaway pressure relief, prevent large-area short circuits or high-voltage ignition in the battery 200, and avoid causing thermal runaway of the entire power battery system or even fire and explosion, thereby improving the safety in operation of the power battery system. Secondly, the pressure relief component 8 and the output pole are arranged at the two ends of the shell 1, and there is a larger space for arranging the pressure relief component 8, which can improve the current carrying capacity of the output pole, and can also conveniently manufacture the pressure relief component 8 and more accurately control its opening pressure, and prevent the welding stress from affecting the opening pressure of the pressure relief component 8 when welding the busbar.

In some embodiments, the battery cell further includes an insulating component 5' arranged between the first end cover 2 and the shell 1 to achieve insulation between the first end cover 2 and the shell 1.

The insulating component 5' may be made of insulating material and is arranged in an area of the shell 1 close to the first opening 12.

In this embodiment, an insulating component 5' is arranged between the first end cover 2 and the shell 1, which can achieve insulation between the first end cover 2 and the shell 1, so that the first end cover 2 and the shell 1 serve respectively as two output poles, and the reliability of insulation between the two output poles is guaranteed. Moreover, the insulating component 5' can also provide sealing to prevent external impurities and water vapor from entering the interior of the shell 1, thereby improving the reliability of operation of the battery cell 100.

In some embodiments, the insulating component 5' is arranged at least partially between the flange 11 and the first end cover 2 and extends beyond an inner edge of the flange 11.

The insulating component 5' may extend beyond the inner edge of the flange 11 on the entire circumference thereof, or may extend beyond the inner edge of the flange 11 on part of the circumference thereof.

This embodiment can increase the creepage distance between the flange 11 and the first end cover 2, which is the shortest distance between the flange 11 and the first end cover 2 along the surface of the insulating material (i.e., the insulating component 5'). When an abnormal situation takes place in the electrode assembly 3 and high-voltage (e.g., a voltage over 500V) discharge occurs, this is equivalent to increasing the safety distance inside the battery cell 100, which can reduce the possibility of risks such as fire and explosion in the electrode assembly 3 and improve the safety in operation of the battery cell 100.

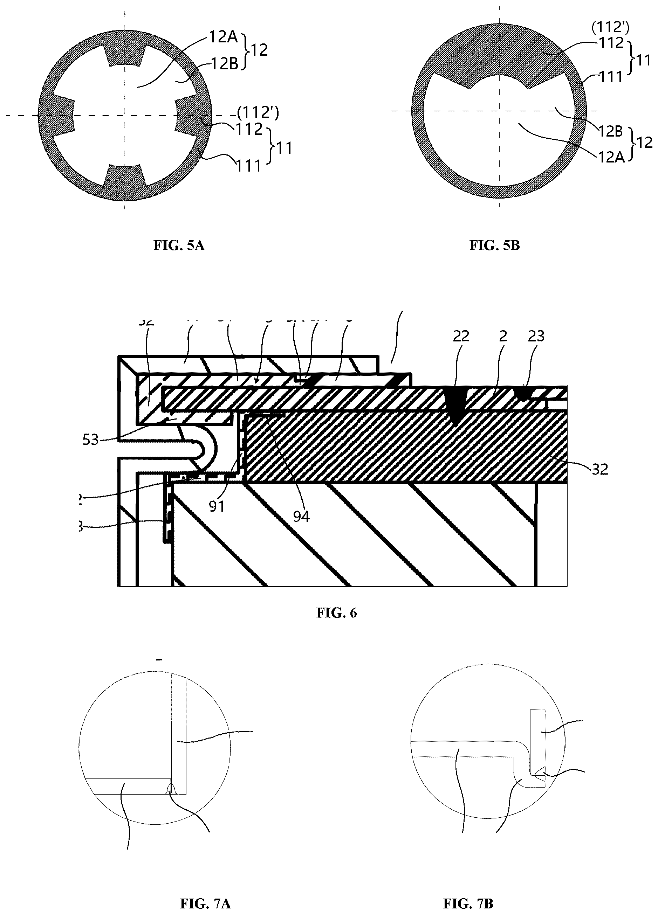

In some embodiments, as shown in FIGS. 4 and 6, the shell 1 includes a side wall 13, the insulating component 5' includes a first insulating member 5, the first insulating member 5 includes a first section 51 and a second section 52, the first section 51 is located between the flange 11 and the first end cover 2, the second section 52 is connected to the first section 51, and the second section 52 is located between an outer edge of the first end cover 2 and the side wall 13.

During the assembly process, according to the structure of the insulating component 5', the insulating component 5' can be first installed on the first end cover 2 and then mounted into the shell 1 together with it; or the insulating component 5' can be first mounted into the shell 1 and then the first end cover 2 can be mounted into the shell 1.

The insulating component 5' of this embodiment includes at least an L-shaped structure which can surround the side wall of the first end cover 2 and the area on the outer surface fitted against the flange 11 at the same time, which can further improve the reliability of insulation between the first end cover 2 and the shell 1.

In some embodiments, as shown in FIG. 6, the first insulating member 5 includes a third section 53, the third section 53 is connected to an end of the second section 52 away from the first section 51, and the third section 53 is fitted against a surface of the first end cover 2 close to the first tab 32.

The extension length of the third section 53 along the radial direction of the first end cover 2 is smaller than the extension length of the first section 51 along the radial direction of the first end cover 2, which can minimize the space occupied by the third section 53 in the first tab 32 to increase the radial distribution range of the first tab 32 and improve the current carrying capacity.

The insulating component 5' of this embodiment forms a C-shaped structure, which can surround the side wall of the first end cover 2, the area on the outer surface fitted against the flange 11, and the area on the inner surface of the first end cover 2 close to the shell 1 at the same time, thereby maximizing the reliability of insulation between the first end cover 2 and the shell 1.

In some embodiments, as shown in FIGS. 5A and 5B, the shell 1 includes a side wall 13, the flange 11 includes a first portion 111 and a second portion 112, the first portion 111 is connected to the side wall 13, the second portion 112 is connected to the first portion 111 and located radially inward of the first portion 111, and the second portion 112 serves as a second output pole.

For example, the first portion 111 may extend along the entire circumference of the side wall 13, and the second portion 112 may extend along the entire circumference of the first portion 111. The busbar may be connected to any circumferential position of the second portion 112 to flexibly arrange the busbar; or the second portion 112 may extend along a part of the circumference of the first portion 111, and a welding track between the first end cover 2 and the first tab 32 may be provided at a position where the second portion 112 is not provided, which can improve the reliability of electrical connection between the first end cover 2 and the first tab 32.

This embodiment can improve the limiting effect for the first end cover 2 by arranging the second portion 112 radially inward of the first portion 111, preventing the first end cover 2 from being displaced, and provide a specific position for connecting the busbar, facilitating positioning of the busbar. With this structure, the first output pole and the second output pole are located at the same end of the battery cell 100, facilitating arrangement of the pressure relief component 8 at the other end of the battery cell, which can reduce the impact of high-temperature exhaust on the side where the busbar is located during thermal runaway pressure relief, prevent large-area short circuits or high-voltage ignition in the battery 200, and avoid causing thermal runaway of the entire power battery system or even fire and explosion, thereby improving the safety in operation of the power battery system.

In some embodiments, as shown in FIG. 5A, the second portion 112 includes multiple protrusions 112' arranged at intervals along the circumference of the shell 1.

In FIG. 5A, the first portion 111 is in an annular shape, and four protrusions 112' are arranged at intervals along the circumference and can be evenly arranged. The protrusion 112' may be a rectangle or ring section, etc., and its shape and size may be designed according to the busbar to be welded. The first opening 12 is formed by being enclosed by the radial inner side wall of the first portion 111, and the radial inner side walls and the circumferential side walls of the multiple protrusions 112'.

This embodiment can increase the welding contact area between the busbar and the flange 11 by providing the protrusion 112', improve welding reliability, reduce the difficulty of positioning during welding, and can increase the current carrying capacity between the flange 11 and the busbar and enhance the conductivity. Furthermore, by providing multiple protrusions 112', the busbar can be selectively connected to the outer surface of any protrusion 112' to improve the flexibility of the location of the busbar.

In some embodiments, as shown in FIG. 5B, the second portion 112 includes one protrusion 112' that continuously extends over a part of the circumference of the shell 1.

In FIG. 5B, the first portion 111 is in an annular shape, and one protrusion 112' is arranged at an interval along the circumference. The protrusion 112' may be in the shape of a rectangle or ring section, etc. The first opening 12 is formed by being enclosed by the radial inner side wall of the first portion 111, the radial inner side wall of the protrusion 112', and the two circumferential side walls of the protrusion 112'.

This embodiment can increase the welding contact area between the busbar and the flange 11 by providing the protrusion 112', improve welding reliability, reduce the difficulty of positioning during welding, and can increase the current carrying capacity between the flange 11 and the busbar and enhance the conductivity. Furthermore, by providing a single continuously extending protrusion 112', manufacturing is facilitated and the connection area of the busbar on the flange 11 can be defined.

In some embodiments, the first end cover 2 is welded to the first tab 32, and the welding tracks are distributed in an area surrounded by an inner edge of the second portion 112, a side edge of the second portion 112, and an inner edge of the first portion 111.

As shown in FIG. 5A, adjacent protrusions 112' form a blank area, where welding tracks between the first end cover 2 and the first tab 32 can be arranged. For example, multiple welding tracks in a radial pattern can be arranged circumferentially to improve the reliability of electrical connection between the first end cover 2 and the first tab 32.

As shown in FIG. 5B, a blank area is formed between the two circumferential side walls of the protrusion 112', where welding tracks between the first end cover 2 and the first tab 32 can be arranged, thereby improving the reliability of electrical connection between the first end cover 2 and the first tab 32. For example, the central angle of the protrusion 112' is smaller than 180°, so that more welding tracks can be arranged. In addition, the central angle of the protrusion 112' may also be set to other angles.

In this embodiment, when welding the first end cover 2 to the first tab 32, the radial welding size range can be increased to increase the distribution range of the first tab 32 that allows current to pass directly. During charging and discharging, lithium ions can be more smoothly deintercalated and intercalated, the risk of lithium plating is reduced, and the conductivity between the first end cover 2 and the first tab 32 is improved.

In some embodiments, as shown in FIG. 6, the battery cell 100 further includes an insulating component 5', which is arranged between the first end cover 2 and the shell 1 to achieve insulation between the first end cover 2 and the shell 1. The insulating component 5' includes: a first insulating member 5; and a second insulating member 6 arranged radially inward of the first insulating member 5. The heat resistance temperature of the second insulating member 6 is higher than the heat resistance temperature of the first insulating member 5.

The first insulating member 5 is located between the first portion 111 and the first end cover 2, and the shape of the first insulating member 5 may be consistent with that of the first portion 111. In order to increase the creepage distance between the first portion 111 and the first end cover 2, the edge of the first insulating member 5 may exceed the edge of the first portion 111. The second insulating member 6 is arranged corresponding to the second portion 112, and its shape may be consistent with that of the second portion 112. In order to increase the creepage distance between the second portion 112 and the first end cover 2, the edge of the second insulating member 6 may exceed the edge of the second portion 112.

For example, the first insulating member 5 is made of rubber material, and the second insulating member 6 is made of polybutylene terephthalate (PBT) material, which can resist a temperature up to about 300 °C, which is higher than that of rubber material, or other high-temperature resistant insulating materials may also be used.

In this embodiment, the busbar is welded to the second portion 112, so that insulation failure caused by the heat generated by the high temperature during the welding can be prevented, thereby improving the reliability of the battery cell 100.

In some embodiments, the second insulating member 6 and the first insulating member 5 are mated using a concave-convex structure 50 at the abutting position.

For example, as shown in FIG. 6, the first insulating member 5 is provided with a first protrusion 5A at a position close to the first end cover 2, and the second insulating member 6 is provided with a second protrusion 6A at a position close to the flange 11. The first protrusion 5A and the second protrusion 6A overlap each other to form a concave-convex matching structure 50, and the first protrusion 5A and the second protrusion 6A can be mated through interference fit. Optionally, the arrangement positions of the first protrusion 5A and the second protrusion 6A may be interchanged.

In this embodiment, the second insulating member 6 and the first insulating member 5 are mated using a concave-convex structure 50 at the abutting position, which enables the second insulating member 6 and the first insulating member 5 to be fitted tightly together, prevents a gap between the two from causing a short circuit between the flange 11 and the first end cover 2, and also improves the sealing effect.

In some embodiments, the Vickers hardness of the first insulating member 5 is lower than the Vickers hardness of the second insulating member 6, and the thickness of the part of the first insulating member 5 between the first portion 111 and the first end cover 2 is greater than the maximum thickness of the second insulating member 6.

When the first insulating member 5 and the second insulating member 6 are compressed together to the same thickness, the first insulating member 5 is deformed by a greater amount.

This embodiment takes into account the fact that current insulating materials can barely achieve sealing and high-temperature insulation at the same time, and sets the first insulating member 5 to have a lower Vickers hardness and a larger thickness, so that when the first insulating member 5 and the second insulating member 6 are squeezed between the flange 11 and the first end cover 2 at the same time, the first insulating member 5 undergoes greater deformation in order to allow the surfaces of the first insulating member 5 and the second insulating member 6 to be flush, thereby achieving a better sealing effect. Moreover, the second insulating member 6 can achieve high-temperature insulation, so that when the busbar is welded at the location of the second portion 112, insulation failure caused by the heat generated by the high temperature during the welding can be prevented, thereby improving the reliability of the battery cell 100.

In some embodiments, the flange 11 is configured to be formed by removing material at the first opening 12.

The first opening 12 can be formed by punching a closed end of the container (a blank of the shell 1) to form the first opening 12.

This embodiment facilitates the formation of a flange 11 of any shape and formation of a wider flange 11, which can increase the welding contact area between the busbar and the flange 11, improve the welding reliability, reduce the difficulty of positioning during welding, and improve the current carrying capacity between the flange 11 and the busbar. Moreover, the first opening 12 can be flexibly punched into a required shape to further meet the layout requirements of the welding track between the first end cover 2 and the first tab 32. In addition, compared with the rolling method, forming the flange 11 by removing material can ensure that the flange 11 is flat, without being affected by the shape of the battery cell 100 and the width of the flange 11, and no wrinkles will be produced on the flange 11, thereby eliminating the need for flattening treatment, and the flange 11 is also enabled to be in reliable contact with the insulating component 5', thereby improving the sealing effect.

In some embodiments, as shown in FIG. 4, the shell 1 includes a side wall 13 and a first end wall 14, the first end wall 14 is connected to an end of the side wall 13 opposite to the first opening 12, the side wall 13 has a second opening 15; the first end wall 14 is formed by a second end cover 4, and the second end cover 4 is used to close the second opening 15.

The side wall 13 has a first opening 12 and a second opening 15 at two ends respectively along the axial direction, the first opening 12 is closed by the first end cover 2, the second opening 15 is closed by the second end cover 4, and the second end cover 4 forms the first end wall 14. The second end cover 4 and the side wall 13 can be connected by welding.

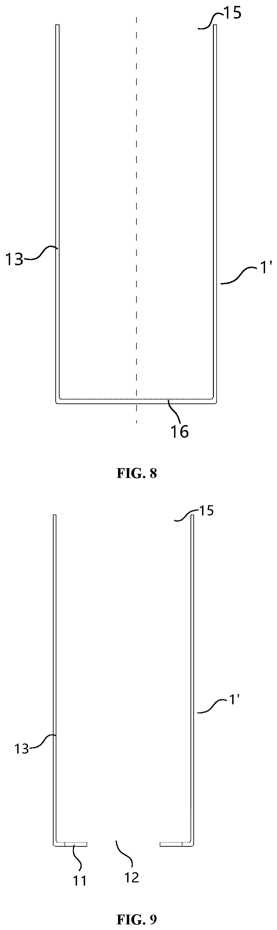

This embodiment is based on a structure in which a flange 11 is formed by removing material. As shown in FIGS. 8 and 9, the closed end of the container 1' needs to be punched to form a first opening 12. The container 1' includes a side wall 13 and a second end wall 16. The second end wall 16 is connected to one end of the side wall 13. The second end wall 16 can completely close the opening of the side wall 13, or partially close the opening of the side wall 13. However, it is necessary to ensure that the second end wall 16 completely covers the flange 11 and the covering area is larger than the area of the flange 11. Since a second end wall 16 is provided at one end of the side wall 13, a second opening 15 needs to be provided at the other end, and the second opening 15 is closed by a separate second end cover 4. This structure provides conditions for forming the flange 11 by removing material.

In some embodiments, as shown in FIG. 7A, the second end cover 4 is connected to the side wall 13 by a first weld 41, and the first weld 41 is formed between an outer edge of the second end cover 4 and an inner surface of the side wall 13.

The second end cover 4 is of a flat disc-shaped structure, the circumferential outer wall of the second end cover 4 is mated with the end portion area of the inner surface of the side wall 13, the outer surface of the second end cover 4 may be flush with the end face of the side wall 13, and welding is performed outside the second end cover 4.

This embodiment can simplify the structure of the second end cover 4, and the second end cover 4 may not protrude from the end portion of the side wall 13, which can further reduce the height of the battery cell 100, thereby improving the energy density of the battery cell 100.

In some embodiments, as shown in FIG. 7B, the second end cover 4 is connected to the side wall 13 by a first weld 41, and the second end cover 4 includes a first body portion 43 and a bent portion 44, a first end of the bent portion 44 is connected to an outer edge of the first body portion 43, a second end of the bent portion 44 covers an end portion of the side wall 13, and the first weld 41 is formed between the second end of the bent portion 44 and the end portion of the side wall 13.

The second end cover 4 is provided with a bent portion 44 in the outer edge area, so that the central area is concave inward relative to the edge area. The bent portion 44 has an L-shaped cross-section, including a vertical portion and a horizontal portion connected to each other, the horizontal portion covers the end portion of the side wall 13, and the vertical portion is fitted against the inner surface of the side wall 13. After the second end cover 4 is installed, welding can be performed from the outer peripheral side of the side wall 13.

The second end cover 4 in this embodiment is provided with a bent portion 44, and the second end of the bent portion 44 covers the end portion of the side wall 13, so that the second end cover 4 can be positioned along the height direction of the battery cell 100 and prevented from moving during welding without the need for additional tooling. Furthermore, if the pressure relief component 8 is arranged on the second end cover 4, the risk of the pressure relief component 8 being damaged by external collision is reduced by making the central area of the second end cover 4 concave inward.

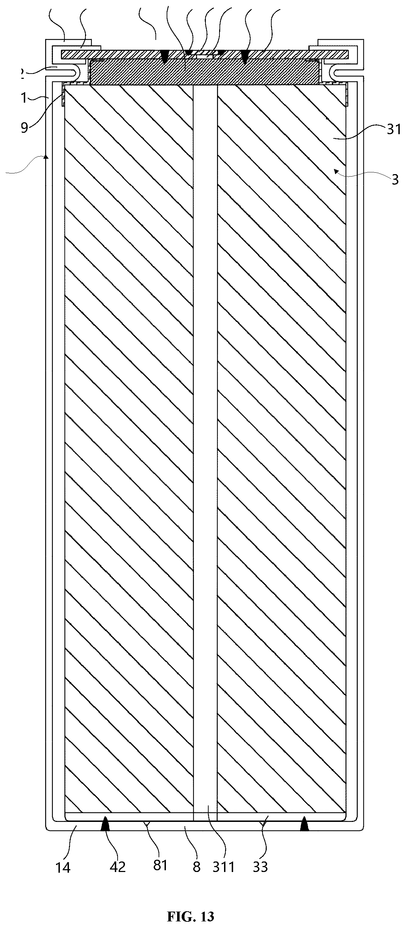

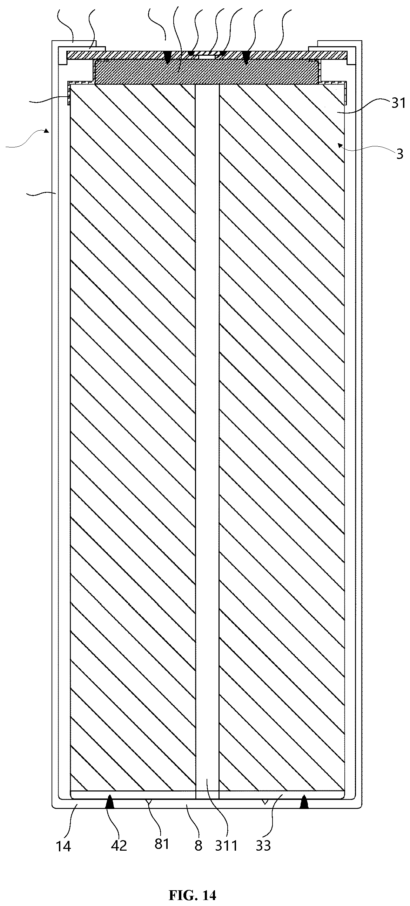

In some embodiments, as shown in FIGS. 13 and 14, the shell 1 includes a side wall 13 and a first end wall 14, the first end wall 14 is connected to an end of the side wall 13 opposite to the first opening 12, the flange 11 only includes a first portion 111, the first portion 111 is connected to the side wall 13, and the first end wall 14 serves as a second output pole.

The first end wall 14 and the side wall 13 may be integrally formed or connected by welding.

In this embodiment, when the flange 11 has a narrow radial width, it can be used only to limit the electrode assembly 3, and the first end wall 14 serves as the second output pole, which provides a larger area for the second output pole to be connected with the busbar, which is also beneficial for positioning during the welding and can improve the reliability of the electrical connection.

In some embodiments, the flange 11 is configured to be formed by bending the end portion of the side wall 13.

After the electrode assembly 3 is mounted in the shell 1 and the first end cover 2 is installed, the end wall of the side wall 13 can be bent toward the outer surface of the first end cover 2.

This embodiment forms the flange 11 by bending, and may adopt a shell 1 in which the side wall 13 and the first end wall 14 are integrally formed. After the electrode assembly 3 is mounted in the shell 1, a shape of a flange 11 is directly formed through bending without the necessity to form an opening 12 through an additional process, which can simplify the process flow and improve assembly efficiency.

In some embodiments, the side wall 13 and the first end wall 14 are integrally formed.

Since there is no need to remove material from the container 1' with a closed end to form the first opening 12, the opening of the shell 1 directly forms the first opening 12, allowing the side wall 13 and the first end wall 14 to be formed integrally. Optionally, the side wall 13 and the first end wall 14 may also be connected by welding.

In this embodiment, the side wall 13 and the first end wall 14 are integrally formed, which can omit the additional process of connecting the first end wall 14 with the side wall 13, thereby further simplifying the process flow and improving assembly efficiency.

In some embodiments, as shown in FIGS. 4 and 13, the shell 1 includes a side wall 13, the side wall 13 includes a second body portion 131 and a protruding portion 132, the protruding portion 132 protrudes toward the inside of the shell 1 relative to the second body portion 131, and the protruding portion 132 is located between the first end cover 2 and the electrode body 31 in the height direction of the battery cell 100.

The protruding portion 132 can be formed by roller groove upset-sealing, the protruding portion 132 and the second body portion 131 may have the same thickness, and the protruding portion 132 is out of contact with the first tab 32 to ensure the insulation performance.

The side wall 13 may be provided with a protruding portion 132 only at the end close to the first end cover 2, and the other end may be directly connected to the second end cover 4 by welding, or the side wall 13 and the first end wall 14 may be integrally formed, which can reduce the overall height of the battery cell 100 and improve the energy density. Optionally, if the first end cover 2 and the second end cover 4 are respectively provided at two ends of the side wall 13, and the first end cover 2 and the second end cover 4 can both be fixed by roller groove upset-sealing, that is, a protruding portion 132 is respectively provided at two ends of the side wall 13.

This embodiment can provide support for the edge position of the first end cover 2 by arranging a protruding portion 132 on the side wall 13, so that the protruding portion 132 can support the first end cover 2 together with the first tab 32. When the first end cover 2 is subjected to external compression or the battery cell 100 is subjected to vibration force, the force on the first tab 32 can be reduced, the first tab 32 can be prevented from being deformed, and the reliability of the electrical connection between the first end cover 2 and the first tab 32 can be improved.

In some embodiments, the protruding portion 132 extends to a position radially inward of the outer side wall of the electrode body 31.

For example, the surfaces of the protruding portion 132 facing the first end cover 2 and the electrode body 31 may both be flat to provide good support, and the portion of the protruding portion 132 facing the first tab 32 may be arc-shaped.

This embodiment allows the protruding portion 132 to extend to a position radially inward of the outer side wall of the electrode body 31, so that the protruding portion 132 can be supported between the electrode body 31 and the first end cover 2 to provide more stable support for the first end cover 2, and the height of the first tab 32 can be maintained, thereby improving the reliability of the electrical connection between the first tab 32 and the first end cover 2.

In some embodiments, the outer edge of the first tab 32 is retracted inwardly by a preset distance from the outer side wall of the electrode body 31.

The outer edge of the first tab 32 is retracted radially inwardly by a preset distance to form a step for accommodating the protruding portion 132. The first tab 32 can be formed into a step by die-cutting, or by a step flattening process, that is, the first tab 32 is continuously extended, and a step is formed by extrusion after the electrode assembly 3 is formed, so that the electrode plate will not be wasted, the scrap rate of cutting the tab is reduced, and the electrode plate is allowed to have a shorter electron transmission distance in the entire extension length range, which can improve the conductivity.

In this embodiment, the outer edge of the first tab 32 is retracted inwardly by a preset distance, which can allow the protruding portion 132 to be designed with a larger extension length in the radial direction, so as to provide more stable support for the first end cover 2 and maintain the height of the first tab 32; it can also avoid excessive squeezing of the insulating material on the side wall of the first tab 32 when the protruding portion 132 is formed during the assembly process, causing insulation failure; in addition, in the case where the insulating component 5' wraps the edge area of the inner surface of the first end cover 2, the first tab 32 is also enabled to avoid the insulating component 5'.

In some embodiments, as shown in FIG. 6, the battery cell 100 further includes a third insulating member 9, the third insulating member 9 includes a fourth section 91 and a fifth section 92, the fourth section 91 is fitted against the outer side wall of the first tab 32, a first end of the fifth section 92 is connected to an end of the fourth section 91 close to a root of the first tab 32, and the fifth section 92 is fitted against the area of the end face of the electrode body 31 where the first tab 32 is not arranged.

For example, the third insulating member 9 may be an insulating film, or a coated insulating layer.

In this embodiment, the outer side wall of the first tab 32 and the area of the end face of the electrode body 31 where the first tab 32 is not arranged can be wrapped by the third insulating member 9 to prevent short circuit caused by contact with the protruding portion 132 and improve the reliability of insulation between the electrode assembly 3 and the shell 1.

In some embodiments, the third insulating member 9 further includes a sixth section 93, the sixth section 93 covers an end portion area of the outer side wall of the electrode body 31, and a first end of the sixth section 93 is connected to a second end of the fifth section 92.

The second end of the sixth section 93 extends along the axial direction of the electrode body 31 in a direction away from the first tab 32, and the sixth section 93 may cover the entire circumferential area of the electrode body 31.

In this embodiment, the sixth section 93 is provided to cover the end portion area of the outer side wall of the electrode body 31, thereby improving the reliability of insulation between the electrode body 31 and the side wall 13 and preventing short circuit.

In some embodiments, the third insulating member 9 further includes a seventh section 94, the seventh section 94 is fitted against the area of the end face of the first tab 32 close to the outer edge, and the first end of the seventh section 94 is connected to an end of the fourth section 91 away from the root of the first tab 32.

The second end of the seventh section 94 extends inwardly along the radial direction of the electrode body 31, and the sixth section 93 can cover the outer edge area of the first tab 32.

In this embodiment, the seventh section 94 is provided to wrap the outer edge area of the first tab 32, and fully wrap the first tab 32 together with the fourth section 91, so as to improve the insulation performance, and also smooth and fit the outer edge area of the first tab 32, so that the first end cover 2 and the end face of the first tab 32 can be fitted better.

In some embodiments, the material of the shell 1 includes steel, the material of the first end cover 2 includes aluminum, the first end cover 2 serves as the positive output pole, and the shell 1 serves as the negative output pole, and accordingly, the first tab 32 is the positive tab, and the second tab 33 is the negative tab; or the material of the shell 1 includes aluminum, the material of the first end cover 2 includes copper or steel, the first end cover 2 serves as the negative output pole, and the shell 1 serves as the positive output pole, and accordingly, the first tab 32 is the negative tab, and the second tab 33 is the positive tab.

In order to improve the rust-proof effect of the shell 1, the outer surface may be nickel-plated.

In this embodiment, the polarities of the first output pole and the second output pole can be selected according to the material of the first end cover 2, so as to achieve welding of matching materials as much as possible and reduce the risk of leakage after welding. For example, the material of the first end cover 2 includes aluminum. Since the first end cover 2 is electrically connected to the first tab 32, the first tab 32 is also made of aluminum. The material of the first end cover 2 includes copper or steel. Since the first end cover 2 is electrically connected to the first tab 32, the first tab 32 is made of copper.

In some embodiments, the battery cell 100 presents a cylinder shape.

For a cylindrical battery cell 100, the first opening 12 can be conveniently formed by removing material, and if the end portion of the side wall 13 is bent to form a flange 11, wrinkles are not likely to be produced when rolling the flange 11.

Secondly, the present application provides a manufacturing method for a battery cell. In some embodiments, the method includes:
an assembly providing step: providing a shell 1, a first end cover 2 and an electrode assembly 3, the shell 1 having a first opening 12, the electrode assembly 3 including an electrode body 31, a first tab 32 and a second tab 33, the first tab 32 and the second tab 33 being led out of the electrode body 31 and having opposite polarities;
an electrode placement step: placing the electrode assembly 3 into the shell 1;
a first opening closure step: closing the first opening 12 by the first end cover 2, and insulating the first end cover 2 from the shell 1; and
an electrical connection step: electrically connecting the first tab 32 to the first end cover 2, and electrically connecting the second tab 33 to the shell 1, where the first end cover 2 serves as the first output pole, and the shell 1 serves as the second output pole.

The assembly providing step is performed first, the electrode placement step and the first opening closure step can be performed in a sequence that is interchangeable according to different embodiments, and the electrical connection step is performed last. For the embodiment in which the flange 11 is formed by removing material, it is necessary to first place the first end cover 2 to close the first opening 12, and then mount the electrode assembly 3 into the shell 1. For the embodiment in which the flange 11 is formed by bending, it is necessary to first mount the electrode assembly 3 into the shell 1, and then place the first end cover 2, and the end portion of the side wall 13 of the shell 1 is bent to form the flange 11 to limit the first end cover 2.

The battery cell 100 of this embodiment uses the first end cover 2 as the first output pole and the shell 1 as the second output pole, omitting electrode terminals, which can reduce the height of the battery cell 100, improve the energy density of the battery cell 100, reduce the number of parts, and reduce the process difficulty and production cost. Moreover, the end face and side face of the shell 1 can both be used as the location for connecting the busbar, which can improve the flexibility in electrically connecting multiple battery cells 100.

In some embodiments, for the battery cell 100 shown in FIG. 4, with reference to FIGS. 8 and 9, the manufacturing method of the present application further includes:
providing a container 1' having a side wall 13 and a second end wall 16, the second end wall 16 being connected to the end portion of the side wall 13; and
removing material from the second end wall 16 to form the first opening 12, a flange 11 being formed outside the first opening 12, the flange 11 being used to limit the movement of the first end cover 2 in a direction away from the electrode assembly 3.

The two steps are performed prior to the assembly providing step. As shown in FIG. 8, the container 1' is a blank for forming the shell 1, and one end of the container 1' is closed by the second end wall 16, and the other end is open. As shown in FIG. 9, the second end wall 16 is punched from outside or inside the container 1', and the portion with the material removed forms the first opening 12, and the remaining area on the second end wall 16 forms the flange 11, which may be of any shape.

This embodiment facilitates the formation of a flange 11 of any shape and formation of a wider flange 11, which can increase the welding contact area between the busbar and the flange 11, improve the welding reliability, reduce the difficulty of positioning during welding, and improve the current carrying capacity between the flange 11 and the busbar. Moreover, the first opening 12 can be flexibly punched into a required shape to further meet the layout requirements of the welding track between the first end cover 2 and the first tab 32. In addition, compared with the rolling method, forming the flange 11 by removing material can ensure that the flange 11 is flat, without being affected by the shape of the battery cell 100 and the width of the flange 11, and no wrinkles will be produced on the flange 11, thereby eliminating the need for flattening treatment, and the flange 11 is also enabled to be in reliable contact with the insulating component 5', thereby improving the sealing effect.

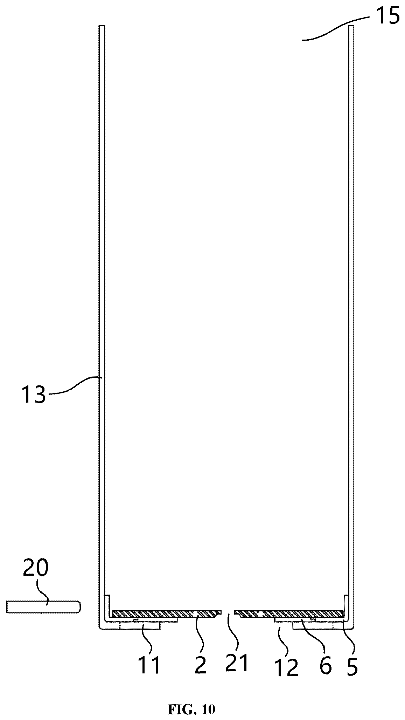

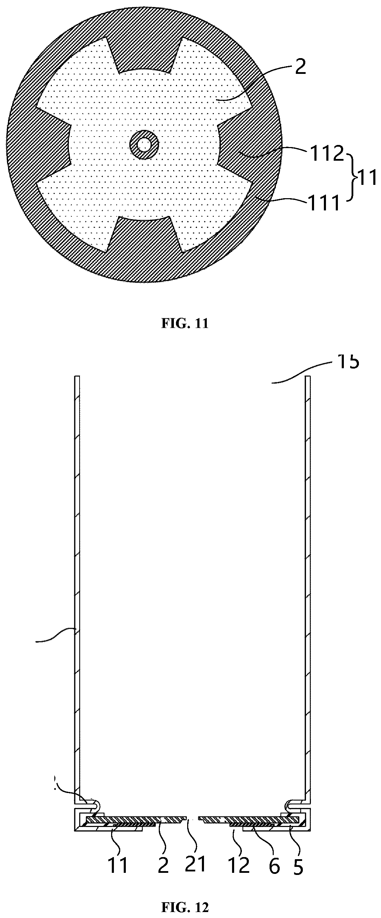

In some embodiments, as shown in FIGS. 10 and 11, the container 1' has a second opening 15, the second opening 15 is opposite to the second end wall 16, and the first opening closure step includes:
before the electrode placement step, placing the first end cover 2 into the container 1' through the second opening 15 so that the first end cover 2 closes the first opening 12.

In this embodiment, for the structure in which the flange 11 is formed by removing material, the first end cover 2 can be placed through the second opening 15 at the other end of the container 1' to close the first opening 12, and then the electrode assembly 3 can be placed, so that the first end cover 2 can be smoothly installed.

In some embodiments, as shown in FIGS. 10 and 11, the battery cell 100 further includes an insulating component 5' arranged between the first end cover 2 and the shell 1 to achieve insulation between the first end cover 2 and the shell 1, and the first opening closure step further includes:
placing the insulating component 5' in the container 1' having the first opening 12.

This step may be performed before placing the first end cover into the container 1', or the insulating component 5' may be installed on the first end cover 2 before placing the insulating component 5' and the first end cover 2 into the container 1' together.

In this embodiment, for the structure in which the flange 11 is formed by removing material, the insulating component 5' can be placed through the second opening 15 at the other end of the container 1', so that the first end cover 2 is insulated from the shell 1 after being placed.

In some embodiments, as shown in FIG. 12, after the insulating component 5' and the first end cover 2 are placed, the side wall 13 of the container 1' is rolled to form a protruding portion 132, the protruding portion 132 protrudes toward the inside of the shell 1 to limit the first end cover 2.

The outer side of the side wall 13 may be rolled by a roller cutter.

After the protruding portion 132 is formed by rolling in this embodiment, the first end cover 2 and the insulating component 5' can be limited to prevent the first end cover 2 from being displaced, and good positioning can be achieved after the electrode assembly 3 is installed. If the extension length of the insulating component 5' on the side face exceeds the inner surface of the first end cover 2, the exceeding portion of the insulating component 5' can be bent to be fitted against the inner surface of the first end cover 2 during rolling to achieve insulation between the protruding portion 132 and the first end cover 2.

In some embodiments, as shown in FIGS. 13 and 14, the manufacturing method of the present application further includes a second opening closure step, which includes:
after the first opening closure step and the electrode placement step, closing the second opening 15 by the second end cover 4.

After the electrode assembly 3 is placed in this embodiment, the second opening 15 is closed by the second end cover 4, so that the installation of all components can be accomplished. The second end cover 4 can be connected to the side wall 13 by welding. The structure in which the second opening 15 is closed by a separate second end cover 4 provides conditions for forming the flange 11 by removing material.

In some embodiments, as shown in FIGS. 13 and 14, the shell 1 includes a side wall 13 and a first end wall 14, the first end wall 14 is connected to an end of the side wall 13 opposite to the first opening 12, and the first opening closure step includes:
after the electrode placement step, covering the first end cover 2 on the first tab 32, and bending the end portion of the side wall 13 to form a flange 11, the flange 11 being used to limit the movement of the first end cover 2 in a direction away from the electrode assembly 3 so that the first end cover 2 closes the first opening 12.

This embodiment forms the flange 11 by bending, and may adopt a shell 1 in which the side wall 13 and the first end wall 14 are integrally formed. After the electrode assembly 3 is mounted in the shell 1, a shape of the flange 11 is directly formed through bending without the necessity to form an opening 12 through an additional process, which can simplify the process flow and improve assembly efficiency.

In some embodiments, the step of bending the end portion of the side wall 13 to form a flange 11 includes:
bending the end portion of the side wall 13 to form the flange 11 by upset sealing.

Before bending to form the flange 11, the first end cover 2 may be placed on the surface of the first tab 32, and then the insulating component 5' may be placed, and then the protruding portion 132 and the flange 11 may be formed by roller groove upset-sealing. Alternatively, the insulating component 5' may be installed on the first end cover 2, and then the insulating component 5' and the first end cover 2 are mounted together in the shell 1, and then the protruding portion 132 and the flange 11 are formed by roller groove upset-sealing.

In this embodiment, the flange 11 is formed by upset sealing, which is a simple process, and a suitable insulating component 5' can be selected according to the shape of the flange 11 to achieve comprehensive improvement in terms of improving insulation performance, improving sealing performance, and increasing creepage distance. For example, by providing a high-temperature resistant second insulating member 6, it is possible to avoid affecting the insulation between the first end cover 2 and the flange 11 during welding of the busbar; by providing an insulating component 5' composed of a first insulating member 5 and a second insulating member 6, with the hardness of the first insulating member 5 being lower than that of the second insulating member 6, the sealing between the first end cover 2 and the flange 11 can be improved; and by extending the insulating component 5' beyond the inner edge of the flange 11, the creepage distance can be increased.

In some embodiments, the step of bending the end portion of the side wall 13 to form a flange 11 includes:
providing insulating glue on the inner surface of the side wall 13 at the first opening 12; and
hot pressing the end portion of the side wall 13 to form the flange 11, the flange 11 and the first end cover 2 being bonded by the insulating glue, the insulating glue being solidified to form an insulating component 5', which is used to achieve insulation between the first end cover 2 and the shell 1.

The insulating glue may be made of polypropylene (PP) material and the like, and the insulating glue can achieve sealing and insulation at the same time.

This embodiment can achieve greater connection strength by adopting thermal composite sealing, and can omit the formation of the protruding portion 132 by roller grooving. Not providing the protruding portion 132 is beneficial to reducing the height of the first tab 32, thereby reducing the overall height of the battery cell 100, and consequently improving the energy density of the battery cell 100.

Some specific embodiments of the battery cell 100 and the manufacturing method for the same of the present application are given below.

In the first embodiment, as shown in FIGS. 4 to 7B, the battery cell 100 includes a shell 1, a first end cover 2, a second end cover 4, an electrode assembly 3, and an insulating component 5'. The shell 1 includes a side wall 13 and a first end wall 14. The first end wall 14 is located at an end of the side wall 13 opposite to the first opening 12. The second end cover 4 serves as the first end wall 14. The electrode assembly 3 is arranged in the shell 1 and includes an electrode body 31, a first tab 32 and a second tab 33, the first tab 32 and the second tab 33 being led out of the electrode body 31 and having opposite polarities, the first tab 32 being electrically connected to the first end cover 2, and the second tab 33 being electrically connected to the shell 1; where the first end cover 2 serves as a first output pole, and the shell 1 serves as a second output pole.

The flange 11 is configured to be formed by removing material at the first opening 12, for example, by punching, and the flange 11 includes a first portion 111 and a second portion 112, the first portion 111 is connected to the side wall 13, the second portion 112 is connected to the first portion 111 and is located radially inward of the first portion 111, and the second portion 112 serves as a second output pole. With this structure, the first output pole and the second output pole are located at the same end of the battery cell 100, facilitating arrangement of the pressure relief component 8 at the second end cover 4, which can reduce the impact of high-temperature exhaust on the side where the busbar is located during thermal runaway pressure relief, and prevent large-area short circuits or high-voltage ignition in the battery 200.

As shown in FIG. 5A, the second portion 112 includes multiple protrusions 112' arranged at intervals along the circumference of the shell 1. As shown in FIG. 5B, the second portion 112 includes one protrusion 112' that continuously extends over a part of the circumference of the shell 1. The first end cover 2 is electrically connected to the first tab 32 by welding to form a second weld 22, and the welding tracks may be distributed in an area surrounded by an inner edge of the second portion 112, a side edge of the second portion 112, and an inner edge of the first portion 111. The second tab 33 is electrically connected to the second end cover 4 by welding to form a third weld 42.

The insulating component 5' is arranged between the first end cover 2 and the shell 1 to achieve insulation between the first end cover 2 and the shell 1. The insulating component 5' includes: a first insulating member 5 and a second insulating member 6 arranged radially inward of the first insulating member 5. The heat resistance temperature of the second insulating member 6 is higher than the heat resistance temperature of the first insulating member 5. The second insulating member 6 and the first insulating member 5 may be mated using a concave-convex structure 50 at the abutting position. The Vickers hardness of the first insulating member 5 is lower than the Vickers hardness of the second insulating member 6, and the thickness of the part of the first insulating member 5 between the first portion 111 and the first end cover 2 is greater than the maximum thickness of the second insulating member 6.

A manufacturing method for this battery cell 100 is as follows.
1. As shown in FIG. 8, a container 1' is provided through stamping or drawing. The container 1' has a side wall 13 and a second end wall 16, the second end wall 16 being connected to the end portion of the side wall 13. As shown in FIG. 9, material is removed from the second end wall 16 to form the first opening 12, and a flange 11 is formed outside the first opening 12, the flange 11 being used to limit the movement of the first end cover 2 in a direction away from the electrode assembly 3.
2. The positive electrode plate, the negative electrode plate and the separator are wound to form the electrode assembly 3, the first tab 32 and the second tab 33 are flattened, a step is pressed on the side of the first tab 32, and the third insulating member 9 is wrapped at the step position.
3. As shown in FIGS. 10 and 11, the first insulating member 5 and the second insulating member 6 are placed into the container 1' through the second opening 15, and the first end cover 2 is placed into the container 1' through the second opening 15, so that the first end cover 2 closes the first opening 12.
4. As shown in FIG. 12, a protruding portion 132 is formed on the side wall 13 of the container 1' at the required position by using a roller cutter through roller grooving to limit the first end cover 2 and to shape the size of the roller grooved container 1'.
5. The electrode assembly 3 is placed into the container 1' through the second opening 15, so that the first tab 32 is in contact with the first end cover 2, and the second opening 15 is closed by the second end cover 4, and the second end cover 4 is connected to the side wall 13 by welding.
6. The first end cover 2 is welded to the first tab 32 through the first opening 12. This welding step may alternatively be performed before welding the second end cover 4 to the side wall 13. Furthermore, the second end cover 4 is welded to the second tab 33 from outside the second end cover 4. This welding step may alternatively be performed before the second end cover 4 is welded to the side wall 13. The welding steps of the first tab 32 and the second tab 33 may be interchanged.
7. After processes such as vacuum dehydration of the battery cell 100, electrolyte injection through the injection hole 21 on the first end cover 2, and formation, the sealing member 7 is welded to form a fourth weld 23.

A second embodiment, as shown in FIG. 13, differs from the first embodiment in that the flange 11 only includes a first portion 111 and is configured to be formed by bending the end portion of the side wall 13, for example, by roller groove upset-sealing. Since the flange 11 has a narrow radial width, the second output pole is led out from the first end wall 14 of the shell 1, and the flange 11 only limits the first end cover 2. The side wall 13 and the first end wall 14 may be integrally formed, and the side wall 13 is also provided with a protruding portion 132.

A manufacturing method for this battery cell 100 is as follows.
1. A shell 1 is provided, the shell 1 having a side wall 13 and a first end wall 14.
2. The second tab 33 of the electrode assembly 3 is placed facing downward into the shell 1.
3. The first end cover 2 is placed on the first tab 32 and the insulating component 5' is installed.
4. Roller grooving the side wall 13 to form a protruding portion 132, which is located between the first end cover 2 and the electrode body 31.

A third embodiment, as shown in FIG. 14, differs from the second embodiment in that it is unnecessary to form the protruding portion 132 on the side wall 13 of the shell 1 by roller groove upset-sealing, and the step of bending the end portion of the side wall 13 to form the flange 11 includes: first, providing insulating glue on the inner surface of the side wall 13 at the first opening 12; second, hot pressing the end portion of the side wall 13 to form the flange 11, the flange 11 and the first end cover 2 being bonded by the insulating glue, the insulating glue being solidified to form an insulating component 5', which is used to achieve insulation between the first end cover 2 and the shell 1.

Although the present application has been described with reference to the preferred embodiments, various improvements may be made thereto and parts therein may be substituted with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery cell, comprising:
a shell (1) having a first opening (12);
a first end cover (2) closing the first opening (12) and being insulated from the shell (1); and
an electrode assembly (3) arranged in the shell (1) and comprising an electrode body (31), a first tab (32) and a second tab (33), the first tab (32) and the second tab (33) being led out of the electrode body (31) and having opposite polarities, the first tab (32) being electrically connected to the first end cover (2), and the second tab (33) being electrically connected to the shell (1);
wherein the first end cover (2) serves as a first output pole, and the shell (1) serves as a second output pole.

2. The battery cell according to claim 1, wherein the first tab (32) and the second tab (33) are respectively led out from two ends of the electrode body (31), the shell (1) comprises a side wall (13) and a first end wall (14), the first end wall (14) is connected to an end of the side wall (13) opposite to the first opening (12), and the second tab (33) is electrically connected to the first end wall (14).

3. The battery cell according to claim 2, wherein the first tab (32) is directly connected to the first end cover (2); and/or the second tab (33) is directly connected to the first end wall (14).

4. The battery cell according to any one of claims 1 to 3, wherein the shell (1) is provided with a flange (11) at the first opening (12), and the flange (11) is used to limit the movement of the first end cover (2) in a direction away from the electrode assembly (3).

5. The battery cell according to claim 4, wherein the flange (11) serves as the second output pole.

6. The battery cell according to claim 5, wherein the shell (1) comprises a side wall (13) and a first end wall (14), the first end wall (14) is connected to an end of the side wall (13) away from the first opening (12), and a pressure relief component (8) is provided on the first end wall (14), and the pressure relief component (8) is used to relieve pressure when the pressure in the battery cell (100) exceeds a preset threshold.

7. The battery cell according to any one of claims 4 to 6, further comprising an insulating component (5') arranged between the first end cover (2) and the shell (1) to achieve insulation between the first end cover (2) and the shell (1).

8. The battery cell according to claim 7, wherein the insulating component (5') is arranged at least partially between the flange (11) and the first end cover (2) and extends beyond an inner edge of the flange (11).

9. The battery cell according to claim 7 or 8, wherein the shell (1) comprises a side wall (13), the insulating component (5') comprises a first insulating member (5), the first insulating member (5) comprises a first section (51) and a second section (52), the first section (51) is located between the flange (11) and the first end cover (2), the second section (52) is connected to the first section (51), and the second section (52) is located between an outer edge of the first end cover (2) and the side wall (13).

10. The battery cell according to claim 9, wherein the first insulating member (5) comprises a third section (53), the third section (53) is connected to an end of the second section (52) away from the first section (51), and the third section (53) is fitted against a surface of the first end cover (2) close to the first tab (32).

11. The battery cell according to any one of claims 4 to 10, wherein the shell (1) comprises a side wall (13), the flange (11) comprises a first portion (111) and a second portion (112), the first portion (111) is connected to the side wall (13), the second portion (112) is connected to the first portion (111) and located radially inward of the first portion (111), and the second portion (112) serves as the second output pole.

12. The battery cell according to claim 11, wherein
the second portion (112) comprises multiple protrusions (112') arranged at intervals along the circumference of the shell (1); or
the second portion (112) comprises one protrusion (112') continuously extending over a part of the circumference of the shell (1).

13. The battery cell according to claim 11 or 12, wherein the first end cover (2) is welded to the first tab (32), and welding tracks are distributed in an area surrounded by an inner edge of the second portion (112), a side edge of the second portion (112), and an inner edge of the first portion (111).

14. The battery cell according to any one of claims 11 to 13, further comprising an insulating component (5') arranged between the first end cover (2) and the shell (1) to achieve insulation between the first end cover (2) and the shell (1), wherein the insulating component (5') comprises:
a first insulating member (5); and
a second insulating member (6) arranged radially inward of the first insulating member(5), the heat-resistant temperature of the second insulating member (6) being higher than the heat-resistant temperature of the first insulating member (5).

15. The battery cell according to claim 14, wherein the second insulating member (6) and the first insulating member (5) are mated using a concave-convex structure (50) at the abutting position.

16. The battery cell according to claim 14 or 15, wherein the Vickers hardness of the first insulating member (5) is lower than the Vickers hardness of the second insulating member (6), and the thickness of the part of the first insulating member (5) between the first portion (111) and the first end cover (2) is greater than the maximum thickness of the second insulating member (6).

17. The battery cell according to any one of claims 11 to 16, wherein the flange (11) is configured to be formed by removing material at the first opening (12).

18. The battery cell according to any one of claims 11 to 17, wherein the shell (1) comprises a side wall (13) and a first end wall (14), the first end wall (14) is connected to an end of the side wall (13) opposite to the first opening (12), the side wall (13) has a second opening (15); the first end wall (14) is formed by a second end cover (4), and the second end cover (4) is used to close the second opening (15).

19. The battery cell according to claim 18, wherein the second end cover (4) is connected to the side wall (13) by a first weld (41), and the first weld (41) is formed between an outer edge of the second end cover (4) and an inner surface of the side wall (13).

20. The battery cell according to claim 18, wherein the second end cover (4) is connected to the side wall (13) by the first weld (41), the second end cover (4) comprises a first body portion (43) and a bent portion (44), a first end of the bent portion (44) is connected to an outer edge of the first body portion (43), a second end of the bent portion (44) covers an end portion of the side wall (13), and the first weld (41) is formed between the second end of the bent portion (44) and the end portion of the side wall (13).

21. The battery cell according to any one of claims 4 to 10, wherein the shell (1) comprises a side wall (13) and a first end wall (14), the first end wall (14) is connected to an end of the side wall (13) opposite to the first opening (12), the flange (11) only comprises a first portion (111), the first portion (111) is connected to the side wall (13), and the first end wall (14) serves as the second output pole.

22. The battery cell according to claim 21, wherein the flange (11) is configured to be formed by bending the end portion of the side wall (13).

23. The battery cell according to claim 21, wherein the side wall (13) and the first end wall (14) are integrally formed.

24. The battery cell according to any one of claims 1 to 23, wherein the shell (1) comprises a side wall (13), the side wall (13) comprises a second body portion (131) and a protruding portion (132), the protruding portion (132) protrudes toward the inside of the shell (1) relative to the second body portion (131), and the protruding portion (132) is located between the first end cover (2) and the electrode body (31) in the height direction of the battery cell (100).

25. The battery cell according to claim 24, wherein the protruding portion (132) extends to a position radially inward of an outer side wall of the electrode body (31).

26. The battery cell according to any one of claims 1 to 25, wherein the outer edge of the first tab (32) is retracted inwardly by a preset distance from the outer side wall of the electrode body (31).

27. The battery cell according to claim 26, further comprising a third insulating member (9), wherein the third insulating member (9) comprises a fourth section (91) and a fifth section (92), the fourth section (91) is fitted against an outer side wall of the first tab (32), a first end of the fifth section (92) is connected to an end of the fourth section (91) close to a root of the first tab (32), and the fifth section (92) is fitted against the area of the end face of the electrode body (31) where the first tab (32) is not arranged.

28. The battery cell according to claim 27, wherein the third insulating member (9) further comprises a sixth section (93), the sixth section (93) covers an end portion area of the outer side wall of the electrode body (31), and a first end of the sixth section (93) is connected to a second end of the fifth section (92).

29. The battery cell according to claim 27 or 28, wherein the third insulating member (9) further comprises a seventh section (94), the seventh section (94) is fitted against the area of the end face of the first tab (32) close to the outer edge, and a first end of the seventh section (94) is connected to an end of the fourth section (91) away from the root of the first tab (32).

30. The battery cell according to any one of claims 1 to 29, wherein
the material of the shell (1) includes steel, the material of the first end cover (2) includes aluminum, the first end cover (2) serves as a positive output pole, and the shell (1) serves as a negative output pole; or
the material of the shell (1) includes aluminum, the material of the first end cover (2) includes copper or steel, the first end cover (2) serves as a negative output pole, and the shell (1) serves as a positive output pole.

31. The battery cell according to any one of claims 1 to 30, wherein the battery cell (100) is of a cylindrical shape.

32. A battery, comprising the battery cell (100) according to any one of claims 1 to 31.

33. An electrical apparatus, comprising the battery cell (100) according to any one of claims 1 to 31 and/or the battery (200) according to claim 30 to supply electric energy for the electrical apparatus.

34. A manufacturing method for a battery cell, comprising:
an assembly providing step: providing a shell (1), a first end cover (2) and an electrode assembly (3), the shell (1) having a first opening (12), the electrode assembly (3) comprising an electrode body (31), a first tab (32) and a second tab (33), the first tab (32) and the second tab (33) being led out of the electrode body (31) and having opposite polarities;
an electrode placement step: placing the electrode assembly (3) into the shell (1);
a first opening closure step: closing the first opening (12) by the first end cover (2), and insulating the first end cover (2) from the shell (1); and
an electrical connection step: electrically connecting the first tab (32) to the first end cover (2), and electrically connecting the second tab (33) to the shell (1), wherein the first end cover (2) serves as a first output pole, and the shell (1) serves as a second output pole.

35. The manufacturing method according to claim 34, further comprising:
providing a container (1') having a side wall (13) and a second end wall (16), the second end wall (16) being connected to the end portion of the side wall (13); and
removing material from the second end wall (16) to form the first opening (12), a flange (11) being formed outside the first opening (12), the flange (11) being used to limit the movement of the first end cover (2) in a direction away from the electrode assembly (3).

36. The manufacturing method according to claim 35, wherein the container (1') has a second opening (15), the second opening (15) is opposite to the second end wall (16), and the first opening closure step comprises:
before the electrode placement step, placing the first end cover (2) into the container (1') through the second opening (15) so that the first end cover (2) closes the first opening (12).

37. The manufacturing method according to claim 36, wherein the battery cell (100) further comprises an insulating component (5') arranged between the first end cover (2) and the shell (1) to achieve insulation between the first end cover (2) and the shell (1), and the first opening closure step further comprises:
placing the insulating component (5') in the container (1') having the first opening (12).

38. The manufacturing method according to claim 37, wherein after the insulating component (5') and the first end cover (2) are placed, the side wall (13) of the container (1') is rolled to form a protruding portion (132), and the protruding portion (132) protrudes toward the inside of the shell (1) to limit the first end cover (2).

39. The manufacturing method according to any one of claims 37 to 38, further comprising a second opening closure step, and the second opening closure step comprises:
after the first opening closure step and the electrode placement step, closing the second opening (15) by the second end cover (4).

40. The manufacturing method according to claim 34, wherein the shell (1) comprises a side wall (13) and a first end wall (14), the first end wall (14) is connected to an end of the side wall (13) opposite to the first opening (12), and the first opening closure step comprises:
after the electrode placement step, covering the first end cover (2) on the first tab (32), and bending the end portion of the side wall (13) to form a flange (11), the flange (11) being used to limit the movement of the first end cover (2) in a direction away from the electrode assembly (3) so that the first end cover (2) closes the first opening (12).

41. The manufacturing method according to claim 40, wherein the step of bending the end portion of the side wall (13) to form the flange (11) comprises:
bending the end portion of the side wall (13) to form the flange (11) by upset sealing.

42. The manufacturing method according to claim 40, wherein the step of bending the end portion of the side wall (13) to form the flange (11) comprises:
providing insulating glue on the inner surface of the side wall (13) at the first opening (12); and
hot pressing the end portion of the side wall (13) to form the flange (11), the flange (11) and the first end cover (2) being bonded by the insulating glue, the insulating glue being solidified to form an insulating component (5'), which is used to achieve insulation between the first end cover (2) and the shell (1).
